(19) Europäisches Patentamt
European Patent Office
Office européen des brevets

(11) **EP 4 410 421 A1**

(12) **EUROPEAN PATENT APPLICATION**

(43) Date of publication:
**07.08.2024  Bulletin 2024/32**

(21) Application number: **23189859.4**

(22) Date of filing: **04.08.2023**

(51) International Patent Classification (IPC):
**B01J 21/06** (2006.01)   **B01J 23/00** (2006.01)
**B01J 23/34** (2006.01)   **B01J 37/02** (2006.01)
**B01J 37/03** (2006.01)   **B01J 37/08** (2006.01)

(52) Cooperative Patent Classification (CPC):
(C-Sets available)
**B01J 23/34; B01D 53/00; B01J 21/063;
B01J 23/002; B01J 37/0238; B01J 37/031;
B01J 37/035; B01J 37/08; B01J 37/088;**
B01J 2523/00                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **03.02.2023   KR 20230015089**

(71) Applicant: **Korea Institute of Science and
Technology
Seoul 02792 (KR)**

(72) Inventors:
• **KWON, Dong-Wook**
  **Seoul (KR)**
• **HA, Heon Phil**
  **Seoul (KR)**
• **KIM, Dongho**
  **Seoul (KR)**
• **PARK, Yeonjae**
  **Seoul (KR)**

(74) Representative: **Crow, Martin
Venner Shipley LLP
200 Aldersgate
London EC1A 4HD (GB)**

Remarks:
Amended claims in accordance with Rule 137(2)
EPC.

(54) **V-MN-SB-TIO2 CATALYST, METHOD OF FABRICATING THE CATALYST, HEAT RECOVERY STEAM GENERATOR COMPRISING  THE CATALYST, AND METHOD OF ELIMINATING YELLOW PLUME USING THE CATALYST**

(57)     Provided are a V-Mn-Sb-TiO$_2$ catalyst, a method of fabricating the catalyst, a heat recovery steam generator including the catalyst, and a method of eliminating yellow plume using the catalyst. The catalyst eliminates nitrogen oxides. The catalyst is supported with vanadium, manganese, and antimony on a titania carrier, wherein the vanadium is contained in an amount of about 1 wt% to about 5 wt% with respect to the total weight of the catalyst, the manganese is contained in an amount of about 0.5 wt% to about 20 wt% with respect to the total weight of the catalyst, and the antimony is contained in an amount of about 0.5 wt% to about 5 wt% with respect to the total weight of the catalyst.

FIG. 2

EP 4 410 421 A1

(52) Cooperative Patent Classification (CPC): (Cont.)

C-Sets
B01J 2523/00, B01J 2523/47, B01J 2523/53,
B01J 2523/55, B01J 2523/72, B01J 2523/822

**Description**

CROSS-REFERENCE TO RELATED APPLICATION

BACKGROUND

1. Field

The present disclosure herein relates to a denitrification catalyst, a method of fabricating the catalyst, a heat recovery steam generator including the catalyst, and a method of eliminating yellow plume using the catalyst, and more specifically, to a V-Mn-Sb-TiO$_2$ catalyst, a method of fabricating the catalyst, a heat recovery steam generator including the catalyst, and a method of eliminating yellow plume using the catalyst.

2. Description of the Related Art

Nitrogen oxides (NOx) are formed during the combustion process of thermoelectric power plants, gas turbines, and industrial boilers, and are discharged into the atmosphere as part of exhaust gas. In the atmosphere, nitrogen oxides are known to cause acid rain and photochemical smog, and are particularly known as causative substances of ultrafine particle generation by secondary reactions. As the most widely used commercialized technology for reducing the emission of nitrogen oxides, selective catalytic reduction (hereinafter, referred to as "SCR") is a method of converting the nitrogen oxides into nitrogen and water on a catalyst by injecting ammonia reducing agents, and the nitrogen oxide reduction process is generally expressed as Chemical Reaction Equation 1 below (standard SCR reaction, hereinafter, referred to as "standard SCR").

<Chemical Reaction Equation 1>     $4NO + 4NH_3 + O_2 \rightarrow 4N_2 + 6H_2O$

The above-described standard SCR reaction condition is a reaction that mainly occurs under the condition in which NO is rich among NO and NOz. As another condition, when the NO$_2$/NO ratio is close to 5:5, a high reaction rate of "fast SCR" reaction occurs actively, and is expressed as Chemical Reaction Equation 2 below. Since the "fast SCR" reaction has a faster reaction rate than the "standard SCR" reaction, a condition that can have excellent SCR performance at low temperatures is formed if the condition in which the "fast SCR" reaction occurs is met.

<Chemical Reaction Equation 2>     $NO + NOz + 2NH_3 \rightarrow 2N_2 + 3H_2O$

Meanwhile, in accordance with the demand for eco-friendly/high efficiency and peak load power generation, additional gas combined power plants are planned to be built until 2030 (the 9th basic plan for power supply). LNG combined cycle power plant has significantly reduced (to 1/6 level) the amount of air pollutants emitted compared to existing coal-fired power plant, but additional reduction measures are needed to cope with the increased demand for increasingly stringent eco-friendly regulations regarding fine particles. In particular, in the initial stage of the operation of the LNG combined cycle power plant, the generation amount of NOx introduced onto a denitrification catalyst is large, but the exhaust gas temperature is low, and thus it is difficult to remove the NOx at the initial stage of the operation. In consideration with the peak load characteristic of LNG power generation (the average number of operations/stops per year at 22 LNG power plants in the Seoul metropolitan area is 83), it is urgent to secure NOx removal technology at the initial stage of operation. Currently, the NOx emission allowance standard is exempted at the initial stage of operation, but the LNG power plants are located in the metropolitan area and densely populated areas, which may adversely affect the ambient air quality and it is required to preemptively develop technology for the extended enforcement of regulations on the total emissions of air pollutants. The exhaust gas temperature at the initial stage of operation is lower than about 200 °C and the temperature range is relatively low. On average, the concentration of NO$_x$ is 60-100 ppm at the initial stage of operation (cold start) of the gas turbine, most of which is generated as nitrogen dioxide (NOz). In the exhaust gas, NOz not only causes environmental pollution, but also has a characteristic of exhibiting yellow plume (visible plume) when the concentration of NOz exceeds about 10 ppm. Accordingly, there is a need for a denitrification system and a method of eliminating yellow plume at a low temperature of about 200 °C or lower.

SUMMARY

The present disclosure provides a denitrification catalyst exhibiting excellent elimination performance of nitrogen oxides (NOx) in a low temperature range of about 200 °C or lower.
The present disclosure also provides a method of fabricating the denitrification catalyst.

The present disclosure also provides a heat recovery steam generator capable of eliminating yellow plume.

The present disclosure also provides a method of eliminating yellow plume.

An embodiment of the inventive concept provides a denitrification catalyst for eliminating nitrogen oxides. The denitrification catalyst according to the inventive concept is a V-Mn-Sb-TiO$_2$ catalyst. The denitrification catalyst is supported with vanadium, manganese, and antimony on a titania carrier, wherein the vanadium is contained in an amount of about 1 wt% to about 5 wt% with respect to the total weight of the catalyst, the manganese is contained in an amount of about 0.5 wt% to about 20 wt% with respect to the total weight of the catalyst, and the antimony is contained in an amount of about 0.5 wt% to about 5 wt% with respect to the total weight of the catalyst.

In an embodiment, the vanadium may be bonded to the catalyst in the form of vanadium oxide, and the vanadium oxide may be at least one of VO$_2$ or VzOs.

In an embodiment, the manganese may be bonded to the catalyst in the form of manganese oxide, and the manganese oxide may be at least one of MnO$_2$, Mn$_2$O$_3$, or MnO.

In an embodiment, the catalyst may further contain oxygen species, wherein in the oxygen species, surface oxygen species disposed on the surface of the catalyst may be about 30% to about 35% with respect to the total oxygen species.

In an embodiment of the inventive concept, a method for fabricating a denitrification catalyst includes preparing an aqueous antimony solution containing an antimony precursor; mixing the aqueous antimony solution with titania and then drying the mixture to form an antimony-titania compound; preparing an aqueous vanadium solution containing a vanadium precursor; preparing an aqueous manganese solution containing a manganese precursor; and mixing the aqueous vanadium solution and the aqueous manganese solution with the antimony-titania compound to prepare a slurry, and drying and calcining the slurry.

In an embodiment, the antimony precursor may be antimony triacetate (Sb(CH$_3$COO)$_3$), the vanadium precursor may be ammonium metavanadate (NH$_4$VO$_3$), and the manganese precursor may be manganese(II) nitrate hydrate ((Mn(NO$_3$)$_2$XH$_2$O), wherein the antimony precursor may be contained so that the antimony content is about 0.5 wt% to about 5 wt% with respect to the total weight of the catalyst, the vanadium precursor may be contained so that the vanadium content is about 1 wt% to about 5 wt% with respect to the total weight of the catalyst, and the manganese precursor may be contained so that the manganese content is about 0.5 wt% to about 20 wt% with respect to the total weight of the catalyst.

In an embodiment, the method may further include adding oxalic acid to the aqueous vanadium solution before the preparing of the aqueous manganese solution.

In an embodiment, the calcining may be performed in a furnace in a gas atmosphere containing nitrogen and oxygen at about 400 °C to about 600 °C for about 0.5 hours to about 5 hours.

In an embodiment of the inventive concept, a heat recovery steam generator includes: a chamber that is disposed between a gas turbine and a chimney and includes an inlet through which an exhaust gas supplied from the gas turbine is injected and an outlet through which the exhaust gas is discharged to the chimney; a first reducing agent injection nozzle that is disposed to be adjacent to the inlet in the chamber and injects a non-ammonia-based reducing agent; a denitrification catalyst part disposed to be adjacent to the outlet in the chamber; and a second reducing agent injection nozzle that is disposed between the denitrification catalyst part and the first reducing agent injection nozzle in the chamber, and injects an ammonia-based reducing agent, wherein the denitrification catalyst part includes a denitrification catalyst formed of a titania carrier on which vanadium, manganese, and antimony are supported, the vanadium is contained in an amount of about 1 wt% to about 5 wt% with respect to the total weight of the catalyst, the manganese is contained in an amount of about 0.5 wt% to about 20 wt% with respect to the total weight of the catalyst, and the antimony is contained in an amount of about 0.5 wt% to about 5 wt% with respect to the total weight of the catalyst.

In an embodiment, the heat recovery steam generator may further include a first steam pipe disposed between the first reducing agent injection nozzle and the second reducing agent injection nozzle in the chamber; and a second steam pipe disposed between the denitrification catalyst part and the outlet.

In an embodiment, the non-ammonia-based reducing agent may include at least one of alkyl alcohol (ROH) or ethylene glycol, the alkyl may contain 1 to 10 carbon atoms, and the ammonia-based reducing agent may include at least one of ammonia, ammonia solution, urea, or urea solution.

In an embodiment, in the heat recovery steam generator, from a first time at which the heat recovery steam generator is turned on to a second time during which the heat recovery steam generator is operated normally, the amount of the non-ammonia-based reducing agent supplied through the first reducing agent injection nozzle may be gradually decreased, and the amount of the ammonia-based reducing agent supplied through the second reducing agent injection nozzle may remain constant.

In an embodiment, the amount of the non-ammonia-based reducing agent supplied at the first time may correspond to about 40% to about 60% of the equivalent of nitrogen dioxide contained in the exhaust gas.

In an embodiment, the amount of the ammonia-based reducing agent supplied at the first time may correspond to about 90% to about 100% of the sum of the equivalents of nitrogen dioxide and nitrogen monoxide contained in the exhaust gas.

In an embodiment, the temperature of the denitrification catalyst part at the first time may be about 70 °C to about 200 °C, and the temperature of the denitrification catalyst part at the second time may be about 350 °C to about 400 °C.

In an embodiment of the inventive concept, a method of eliminating yellow plume using the heat recovery steam generator includes: at the first time at which the heat recovery steam generator is turned on, supplying the non-ammonia-based reducing agent through the first reducing agent injection nozzle so that the non-ammonia-based reducing agent corresponds to about 40% to about 60% of the equivalent of nitrogen dioxide contained in the exhaust gas and supplying the ammonia-based reducing agent through the second reducing agent injection nozzle so that the ammonia-based reducing agent corresponds to about 90% to about 100% of the sum of the equivalents of nitrogen dioxide and nitrogen monoxide contained in the exhaust gas; and at the second time during which the heat recovery steam generator is operated normally, stopping the supply of the non-ammonia-based reducing agent but keeping the amount of the ammonia-based reducing agent supplied.

In an embodiment, the method of eliminating yellow plume may further include gradually decreasing the amount of the non-ammonia-based reducing agent supplied from the first time to the second time.

At least some of the above and other features of the invention are set out in the claims.

BRIEF DESCRIPTION OF THE FIGURES

The accompanying drawings are included to provide a further understanding of the inventive concept, and are incorporated in and constitute a part of this specification. The drawings illustrate exemplary embodiments of the inventive concept and, together with the description, serve to explain principles of the inventive concept. In the drawings:

FIG. 1 illustrates a cross-sectional view of a heat recovery steam generator according to embodiments of the inventive concept;

FIG. 2 is a graph showing a flow rate/concentration over a process time in the heat recovery steam generator according to embodiments of the inventive concept;

FIG. 3A is a graph showing NOx conversion of catalysts fabricated according to Fabrication Example 2 of the inventive concept and Comparative Fabrication Examples 1 to 4 under the condition in which the ratio of $NO:NO_2$ is 4:6;

FIG. 3B is a graph showing the concentration (ppm) of $NO_2$ measured at the outlet of a catalyst reactor after conducting a catalyst evaluation experiment using the catalysts fabricated according to Fabrication Example 2 of the inventive concept and Comparative Fabrication Examples 1 to 4 under the condition in which the ratio of $NO:NO_2$ is 4:6;

FIG. 4A is a graph showing NOx conversion of catalysts fabricated according to Fabrication Examples 1 to 7 of the inventive concept under the condition in which the ratio of $NO:NO_2$ is 4:6;

FIG. 4B is a graph showing the concentration (ppm) of $NO_2$ measured at the outlet of the catalyst reactor after conducting the catalyst evaluation experiment using the catalysts fabricated according to Fabrication Examples 1 to 7 under the condition in which the ratio of $NO:NO_2$ is 4:6;

FIG. 5A is a graph showing NOx conversion of the catalysts fabricated according to Fabrication Example 2 of the inventive concept and Comparative Fabrication Examples 1 to 4 under the condition in which the ratio of $NO:NO_2$ is 9: 1;

FIG. 5B is a graph showing the concentration (ppm) of $NO_2$ measured at the outlet of the catalyst reactor after conducting the catalyst evaluation experiment using the catalysts fabricated according to Fabrication Example 2 of the inventive concept and Comparative Fabrication Examples 1 to 4 under the condition in which the ratio of $NO:NO_2$ is 9:1;

FIG. 6A is a graph showing NOx conversion of the catalysts fabricated according to Fabrication Examples 1 to 7 of the inventive concept under the condition in which the ratio of $NO:NO_2$ is 9: 1;

FIG. 6B is a graph showing the concentration (ppm) of $NO_2$ measured at the outlet of the catalyst reactor after conducting the catalyst evaluation experiment using the catalysts fabricated according to Fabrication Examples 1 to 7 under the condition in which the ratio of $NO:NO_2$ is 9: 1;

FIG. 7 is a graph showing NOx conversion of the catalysts fabricated according to Fabrication Examples 2 and 8 of the inventive concept at the $NO:NO_2$ equivalent ratio of 4:6 and 9:1;

FIG. 8 is a graph showing the NO oxidation performance of the catalysts fabricated according to Fabrication Examples 2 and 5 of the inventive concept and Comparative Fabrication Examples 1 and 3;

FIG. 9 is a graph showing the ratio of surface adsorbed oxygen species to the total oxygen species by performing XPS analysis on the catalysts fabricated according to Fabrication Examples 1 to 5 of the inventive concept and Comparative Fabrication Examples 1 and 3;

FIG. 10 is a graph showing the ratio of quadrivalent vanadium to the total vanadium (V) oxidation state by performing XPS analysis on the catalysts fabricated according to Fabrication Examples 1 to 5 of the inventive concept and Comparative Fabrication Examples 1 and 3;

FIG. 11 is a graph showing the ratio of quadrivalent manganese to the total manganese (Mn) oxidation state by performing XPS analysis on the catalysts fabricated according to Fabrication Examples 1 to 5 of the inventive concept and Comparative Fabrication Examples 1 and 3;

FIG. 12A is a graph showing a desorption profile of ammonia (temperature programmed desorption with $NH_3$; $NH_3$-TPD) desorbed in the process of adsorbing ammonia at 50 °C and then raising the temperature to 700 °C with respect to the catalysts fabricated according to Fabrication Examples 2 and 5 of the inventive concept, and Comparative Fabrication Examples 1 and 3;

FIG. 12B is a bar graph showing the amount of $NH_3$ desorbed after adsorption on the catalysts fabricated according to Fabrication Examples 2 and 5 of the inventive concept and Comparative Fabrication Examples 1 and 3;

FIG. 13A is a graph showing the desorption of nitrogen monoxide in a profile (temperature programmed desorption with NO; NO-TPD) of a gas desorbed in the process of adsorbing nitrogen monoxide at 50 °C and then raising the temperature to 700 °C with respect to the catalysts fabricated according to Fabrication Examples 2 and 5 of the inventive concept, and Comparative Fabrication Examples 1 and 3;

FIG. 13B is a graph showing the desorption of nitrogen monoxide in a profile (temperature programmed desorption with NO; NO-TPD) of a gas desorbed in the process of adsorbing nitrogen dioxide at 50 °C and then raising the temperature to 700 °C with respect to the catalysts fabricated according to Fabrication Examples 2 and 5 of the inventive concept, and Comparative Fabrication Examples 1 and 3; and

FIG. 14 is a graph showing a desorption profile of nitrogen dioxide (temperature programmed desorption with NOz; NOz-TPD) desorbed in the process of adsorbing nitrogen dioxide at 50 °C and then raising the temperature to 700 °C with respect to the catalysts fabricated according to Fabrication Examples 2 and 5 of the inventive concept, and Comparative Fabrication Examples 1 and 3.

DETAILED DESCRIPTION

Hereinafter, the present invention will be described in detail with reference to the accompanying drawings in such a manner that the technical idea of the present invention may easily be carried out by a person with ordinary skill in the art to which the invention pertains.

A denitrification catalyst according to an embodiment of the inventive concept eliminates nitrogen oxides. The denitrification catalyst according to the inventive concept is a V-Mn-Sb-$TiO_2$ catalyst. The denitrification catalyst is supported with vanadium, manganese and antimony on a titania carrier, and the vanadium is contained in an amount of preferably about 1 wt% to about 5 wt% and more preferably about 2.5 wt% to about 3.5 wt% with respect to the total weight of the catalyst. In the catalyst, when the vanadium content is less than about 1.0 wt%, the effect of eliminating nitrogen oxides may be very low, and when the vanadium content is greater than about 5.0 wt%, the efficiency of eliminating nitrogen oxides may be much lowered compared to the increase in the vanadium content.

The vanadium contained in the catalyst has an oxidation number of +4 or +5. That is, the vanadium may be bonded to the catalyst in the form of a vanadium oxide, and the vanadium oxide may be at least one of $VO_2$ or VzOs. In VOz, vanadium has an oxidation number of +4, and in $V_2O_5$, vanadium has an oxidation number of +5. The ratio of $VO_2$ in which vanadium has an oxidation number of +4 in the total amount of vanadium oxide (the sum of $VO_2$ and $V_2O_5$) contained in the catalyst is preferably about 30% to about 40%, and more preferably about 35% to about 40%.

The manganese is contained in an amount of preferably about 0.5 wt% to about 20 wt%, and more preferably about 1.5 wt% to about 1.8 wt% with respect to the total weight of the catalyst. In the catalyst, when the manganese content is less than about 0.5 wt%, the effect of eliminating nitrogen oxides may be very low, and when the manganese content is greater than about 20 wt%, the efficiency of eliminating nitrogen oxides may be much lowered compared to the increase in the manganese content.

The manganese contained in the catalyst has an oxidation number of +2 to +4. In an embodiment, the manganese may be bonded to the catalyst in the form of manganese oxide, and the manganese oxide may be at least one of $MnO_2$, $Mn_2O_3$, or MnO. In $MnO_2$, manganese has an oxidation number of +4, and in $Mn_2O_3$, manganese has an oxidation number of +3. In MnO, manganese has an oxidation number of +2. The ratio of MnOz in which manganese has an oxidation number of +4 in the total amount of manganese oxide (the sum of $MnO_2$, $Mn_2O_3$, and MnO) contained in the catalyst is preferably about 35% to about 50%, and more preferably about 45% to about 50%.

The antimony is contained in an amount of preferably about 0.5 wt% to about 5 wt%, and more preferably about 2.5 wt% to about 3.5 wt% with respect to the total weight of the catalyst. In the catalyst, when the antimony content is less than about 0.5 wt%, the effect of eliminating nitrogen oxides may be very low, and when the antimony content is greater than about 5 wt%, the efficiency of eliminating nitrogen oxides may be much lowered compared to the increase in the antimony content. The antimony may have an oxidation number of +5. The antimony may be bonded to the catalyst in the form of an antimony oxide, and the antimony oxide may be at least one of $Sb_2O_3$ or $Sb_2O_5$. In the catalyst according to the inventive concept, the antimony may be present only in the state of the oxidation number of +5.

The catalyst may further contain oxygen species. The oxygen species may be referred to as oxygen atoms. The catalyst includes titania (titanium oxide), vanadium oxide, manganese oxide, and antimony oxide, and among oxygen species present in the catalyst, the surface oxygen species disposed on the surface of the catalyst may be preferably about 15% to about 35%, and more preferably about 30% to about 35%, with respect to the total oxygen species. The surface oxygen species may also be referred to as surface chemical oxygen species, surface adsorption oxygen species, or surface chemical adsorption oxygen species. In the denitrification catalyst according to the inventive concept, the surface oxygen species are very active since the amount of the surface oxygen species is about 30% to about 35% with respect to the total oxygen species.

The V-Mn-Sb-TiO$_2$ catalyst, which is the denitrification catalyst according to the inventive concept, has a specific range of an oxidation number of vanadium, an oxidation number of manganese, and a ratio of surface oxygen species, thereby exhibiting excellent performance of eliminating nitrogen oxides in a low temperature region of about 200 °C or lower.

A method for fabricating a denitrification catalyst according to an embodiment of the inventive concept includes preparing an aqueous antimony solution containing an antimony precursor; mixing the aqueous antimony solution with a titania carrier and then drying the mixture to form an antimony-titania compound; preparing an aqueous vanadium solution containing a vanadium precursor; preparing an aqueous manganese solution containing a manganese precursor; and mixing the aqueous vanadium solution and the aqueous manganese solution with the antimony-titania compound to prepare a slurry, and drying and calcining (or heating) the slurry.

In an embodiment, the antimony precursor may be antimony triacetate ($Sb(CH_3COO)_3$), the vanadium precursor may be ammonium metavanadate ($NH_4VO_3$), and the manganese precursor may be manganese(II) nitrate hydrate (($Mn(NO_3)_2XH_2O$), wherein the antimony precursor may be contained so that the antimony content is about 0.5 wt% to about 5 wt% with respect to the total weight of the catalyst, the vanadium precursor may be contained so that the vanadium content is about 1 wt% to about 5 wt% with respect to the total weight of the catalyst, and the manganese precursor may be contained so that the manganese content is about 0.5 wt% to about 20 wt% with respect to the total weight of the catalyst.

In an embodiment, the method may further include adding oxalic acid to the aqueous vanadium solution before the preparing of the aqueous manganese solution.

In an embodiment, the calcining may be performed in a furnace in a gas atmosphere containing nitrogen and oxygen at about 400 °C to about 600 °C for about 0.5 hours to about 5 hours.

As the titania carrier, amorphous titanic acids ($TiO_x(OH)_{4-2x}$), crystalline anatase titanium dioxide or rutile titanium dioxide, or a mixture of anatase and rutile titanium dioxide may be used. The manganese precursor and the antimony precursor may each be introduced into the titania carrier using the wet impregnation technique as a promoter.

A specific fabrication embodiment is as follows.

<Fabrication Embodiment 1>

First, an antimony precursor having an amount of 3 wt% of antimony with respect to the total weight of the catalyst is dissolved in acetic acid ($CH_3COOH$) to prepare an aqueous antimony solution. In this case, antimony acetate ($Sb(CH_3COO)_3$) is used as the antimony precursor. The prepared aqueous antimony solution is mixed with titania, stirred in a slurry state, and then dried by rotary evaporator.

Thereafter, in order to remove residual moisture contained in the catalyst micropores, after drying in a dryer for about 24 hours, calcination (primary heat treatment process) is performed in an air atmosphere. In this case, the resulting product is referred to as antimony-titania. The primary heat treatment process may be performed at about 200 °C to about 600 °C for about 1-8 hours, preferably at about 200 °C for about 5 hours.

Subsequently, a manganese precursor having an amount of 1.62 wt% of manganese with respect to the total weight of the catalyst is dissolved in distilled water to prepare an aqueous manganese solution. In this case, as the manganese precursor, manganese(II) nitrate hydrate ($Mn(NO_3)_2·XH_2O$) is used.

Then, a vanadium precursor having an amount of 3 wt% of vanadium with respect to the total weight of the catalyst is dissolved in distilled water to prepare an aqueous vanadium solution. In this case, ammonium metavanadate ($NH_4VO_3$) is used as the vanadium precursor.

Then, the aqueous manganese solution and the aqueous vanadium solution are mixed with antimony-titania, stirred in a slurry state, dried, and then dried for about 24 hours using a dryer in order to remove residual moisture contained in the catalyst micropores. A secondary heat treatment process is performed on the sample that has undergone the drying process in an air atmosphere. The secondary heat treatment process is performed in a gas atmosphere containing nitrogen and oxygen for about 1-8 hours at about 200 °C to about 700 °C, preferably, at about 500 °C for about 5 hours. The primary heat treatment process and the secondary heat treatment process may be performed in a tube-type furnace, a convection-type furnace, a grate-type furnace, or the like. In this way, it is possible to fabricate a V-Mn-Sb-TiO$_2$ catalyst in which 3 wt% of antimony, 1.62 wt% of manganese, and 3 wt% of vanadium are supported on a titania carrier.

The V-Mn-Sb-TiO$_2$ catalyst according to the inventive concept may be used by being coated with a small amount of binder on a support which is processed into a particle or monolithic form, or is produced or processed into the form of a plate, a slate, a pellet, or the like, but is not particularly limited thereto.

In addition, the V-Mn-Sb-TiO$_2$ catalyst according to the inventive concept may be used by coating a structure such as a metal plate, metal fibers, ceramic filters, honeycomb, and glass tubes, or an air purifier, an interior decoration, interior and exterior materials, wallpaper, and the like, when actually applied, or may be used even in the rear end of an industrial process in which exhaust gas including sulfur dioxide is generated.

In the V-Mn-Sb-TiO$_2$ catalyst that is the denitrification catalyst fabricated by the method, an X-ray photoelectron spectroscopy (XPS) analysis technique may be used as a means for analyzing the oxidation state of supported vanadium and manganese. Through the XPS analysis, the oxidation state and the distribution ratio of the catalyst element may be analyzed by deconvoluting the characteristic peaks of each element present on the surface of the catalyst on the basis of the intrinsic binding energy of the oxide containing the element. In this case, each peak may be deconvoluted according to the Gaussian-Lorentzian method. According to the XPS analysis, it was confirmed that the denitrification catalyst according to the inventive concept, in which manganese and antimony are added and a vanadium oxide having an oxidation number of +4 is included as an active ingredient, has an excellent performance for converting nitrogen oxides into nitrogen in a low temperature region of about 200 °C or lower.

In addition, a temperature programmed desorption (TPD) analysis technique may be used to confirm the adsorption and desorption characteristics of the V-Mn-Sb-TiO$_2$ catalyst for ammonia, nitrogen monoxide, and nitrogen dioxide. Through the TPD analysis, the affinity, that is, adsorption capacity of the catalyst and each of the reaction gases may be confirmed.

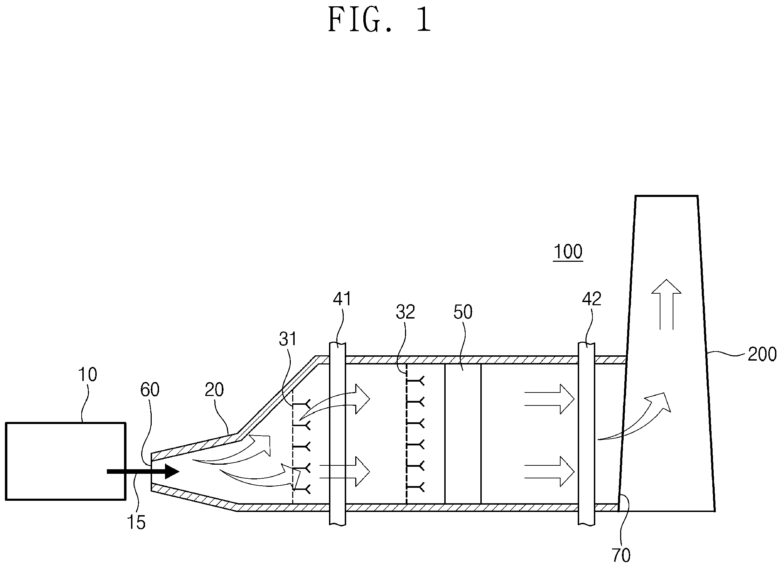

FIG. 1 illustrates a cross-sectional view of a heat recovery steam generator according to embodiments of the inventive concept.

Referring to FIG. 1, a heat recovery steam generator 100 according to the inventive concept is disposed between a gas turbine 10 and a chimney 200. The heat recovery steam generator 100 includes a chamber 20 including an inlet 60 through which an exhaust gas 15 supplied from the gas turbine 10 is injected, and an outlet 70 through which the exhaust gas 15 is discharged to the chimney 200. The heat recovery steam generator 100 further includes a first reducing agent injection nozzle 31 that is disposed to be adjacent to the inlet 60 in the chamber 20 and injects a non-ammonia-based reducing agent, a denitrification catalyst part 50 disposed to be adjacent to the outlet 70 in the chamber 20, and a second reducing agent injection nozzle 32 that is disposed between the denitrification catalyst part 50 and the first reducing agent injection nozzle 31 in the chamber 20, and injects an ammonia-based reducing agent. The first reducing agent inj ection nozzle 31 may be provided in plural and disposed in a row. The second reducing agent injection nozzle 32 may be provided in plural and disposed in a row.

The non-ammonia-based reducing agent may be a hydrocarbon-based reducing agent. The non-ammonia-based reducing agent may include at least one of alkyl alcohol (ROH) or ethylene glycol, and an alkyl group contained in the alkyl alcohol (ROH) may contain 1 to 10 carbon atoms. The alkyl alcohol (ROH) may be preferably ethanol. The ammonia-based reducing agent may include at least one of ammonia, ammonia solution, urea, or urea solution. The denitrification catalyst part 50 includes the denitrification catalyst composed of the titania carrier on which vanadium, manganese, and antimony are supported.

The heat recovery steam generator 100 further includes a first steam pipe 41 passing through the chamber 20 and disposed between the first reducing agent injection nozzle 31 and the second reducing agent injection nozzle 32, and a second steam pipe 42 disposed between the denitrification catalyst part 50 and the outlet 70. The first steam pipe 41 and the second steam pipe 42 may absorb the heat of the exhaust gas 15 to generate steam.

A method of operating the heat recovery steam generator 100 according to the inventive concept or a method of eliminating yellow plume using the heat recovery steam generator 100 will be described below.

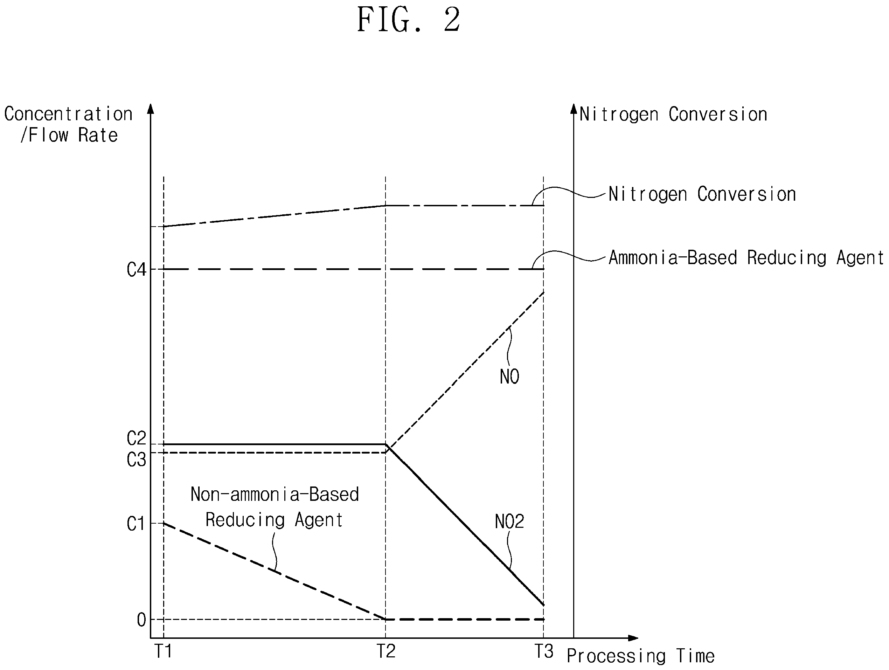

FIG. 2 is a graph showing a flow rate/concentration over a process time in the heat recovery steam generator according to embodiments of the inventive concept.

Referring to FIG. 2, while the heat recovery steam generator 100 is stopped, the temperature of the heat recovery steam generator 100 starts to increase as the exhaust gas 20 is introduced into the heat recovery steam generator 100 at the first time T1 when the heat recovery steam generator 100 is turned on for operation. The temperature of the exhaust gas 15 discharged from the gas turbine 10 may be about 450 °C to about 550 °C. At the first time T1, the first temperature of the denitrification catalyst part 50 may be about 70 °C to about 200 °C.

The exhaust gas 20 may include nitrogen dioxide and nitrogen monoxide as nitrogen oxides. The amount C2 of nitrogen dioxide in the exhaust gas 20 at the inlet 60 of the heat recovery steam generator 100 at the initial operation (the first time T1) of the heat recovery steam generator 100 is relatively greater than the amount C3 of nitrogen monoxide. For example, a ratio of the amount of nitrogen dioxide C2 to the amount of nitrogen monoxide C3 in the exhaust gas 15 may be about 9:1. The amount of the non-ammonia reducing agent supplied may be controlled in proportion to the concentration of nitrogen dioxide contained in the exhaust gas 15. Specifically, the amount of the non-ammonia-based reducing agent supplied through the first reducing agent injection nozzle 31 at the first time T1 may be adjusted to correspond to about 40% to about 60% of the amount (equivalent, reaction amount, or molar amount) of nitrogen dioxide reacted with the non-ammonia-based reducing agent. For example, when the non-ammonia-based reducing agent reacts with nitrogen dioxide at 1:1, the amount C1 of the non-ammonia-based reducing agent supplied at the first time T1 may correspond to about 40% to about 60% of the amount C2 of nitrogen dioxide contained in the exhaust gas 20. Thus, the non-ammonia-based reducing agent may react with nitrogen dioxide according to Chemical Reaction Equation 3 to generate nitrogen monoxide.

<Chemical Reaction Equation 3>        $NO_2 + ROH \rightarrow NO + H_2O$

As a result, the amount C2 of nitrogen dioxide decreases and the amount C3 of nitrogen monoxide increases. Thus, a ratio of the amount C2 of nitrogen dioxide to the amount C3 of nitrogen monoxide between the first reducing agent injection nozzle 31 and the second reducing agent injection nozzle 32 may be about 1: 1. As described above, the ratio of the amount C2 of nitrogen dioxide to the amount C3 of nitrogen monoxide becomes about 1: 1, and this may be a condition in which a fast selective catalytic reduction (SCR) reaction occurs.

The amount of the ammonia-based reducing agent supplied may be controlled in proportion to the concentration of nitrogen oxides contained in the exhaust gas 15. Specifically, the amount of the ammonia-based reducing agent supplied through the second reducing agent injection nozzle 32 at the first time T1 may correspond to about 90% to about 100% of the amount (equivalent, reaction amount, or molar amount) (the sum of the amount of nitrogen dioxide and the amount of nitrogen monoxide) of nitrogen oxides reacted with the ammonia-based reducing agent. As described above, when the ammonia-based reducing agent is supplied through the second reducing agent injection nozzle 32, the fast SCR reaction occurs as shown in Chemical Reaction Equation 2 below.

<Chemical Reaction Equation 2>        $NO + NO_2 + 2NH_3 \rightarrow 2N_2 + 3H_2O$

As a result, the nitrogen oxides (NO and NOz) react with ammonia and are converted into nitrogen gas and water vapor to remove nitrogen oxides, and yellow plume caused by nitrogen dioxide may be eliminated.

The temperature in the heat recovery steam generator 100 continuously rises, and the temperature at the second time T2 may be about 70% to about 80% of the temperature at the third time T3 in the normal operation state. The temperature of the denitrification catalyst part 50 at the third time T3 may be about 350 °C to about 400 °C.

While the heat recovery steam generator 100 is operated, the amount of the non-ammonia-based reducing agent supplied may gradually decrease from the first time T1 to the third time T3, and the amount of the ammonia-based reducing agent supplied may be constant. After the second time T2, the amount of the non-ammonia reducing agent supplied may be zero. As the ratio of the amount C2 of nitrogen dioxide to the amount C3 of nitrogen monoxide becomes about 1: 1 from the first time T1 to the second time T2, a fast selective catalytic reduction (SCR) reaction of Chemical Reaction Equation 2 may occur so that nitrogen oxides may be converted to nitrogen. As nitrogen dioxide reacts with the non-ammonia-based reducing agent to generate nitrogen monoxide from the second time T2 to the third time T3, the amount C2 of nitrogen dioxide gradually decreases, but the amount C3 of nitrogen monoxide gradually increases, so that the SCR reaction of Chemical Reaction Equation 1 may occur from the second time T2 to the third time T3.

<Chemical Reaction Equation 1>        $4NO + 4NH_3 + O_2 \rightarrow 4N_2 + 6H_2O$

As a result, nitrogen monoxide may be converted into nitrogen gas and water vapor to eliminate nitrogen oxides. According to the method for operating the heat recovery steam generator or the method for eliminating yellow plume using the heat recovery steam generator according to the inventive concept, the nitrogen conversion in which nitrogen oxide is converted into nitrogen may exhibit a nitrogen conversion of about 90% or more, which is almost similar to a nitrogen conversion at the third time T3 in the normal operation state from the first time T1. Therefore, it is possible to eliminate yellow plume from the initial operation of the heat recovery steam generator 100.

Such a heat recovery steam generator equipment or system may achieve denitrification catalyst technology exhibiting an excellent denitrification efficiency of about 90% or more at about 200 °C or higher between the initial operation (cold start) and the normal operation.

Hereinafter, specific experimental examples of the inventive concept will be described. Although the inventive concept may be more clearly understood by the following experimental examples, these experimental examples are merely for illustration of the present invention and are not intended to limit the scope of the present invention.

<Fabrication Example 1>

In the fabrication of a V-Mn-Sb-TiO$_2$ catalyst for eliminating nitrogen oxides, antimony acetate (Sb(CH$_3$COO)$_3$), which is an antimony precursor, was quantified so that the antimony (Sb) content became 3 wt% based on the total weight of the catalyst, and then the antimony precursor was dissolved in acetic acid (CH$_3$COOH) to prepare an aqueous antimony solution. The prepared aqueous antimony solution was mixed with titania to prepare a slurry, moisture was removed using a vacuum rotary evaporator, and the slurry was sufficiently dried in a 103 °C-dryer for about 24 hours or longer in order to completely remove the moisture contained in micropores.

Then, the dried slurry was calcined in a convention-type furnace at about 200 °C in an air atmosphere for about 5 hours to prepare antimony-titania (hereinafter, 3Sb/TiO$_2$, which means that antimony is added to the titania carrier at 3 wt% based on the total weight of the catalyst, and 3Sb means 3 wt% of antimony).

Subsequently, ammonium metavanadate (NH$_4$VO$_3$), which is a vanadium precursor, was quantified so that the vanadium (V) content became 3 wt% based on the total weight of the catalyst, and then the vanadium precursor was dissolved in distilled water heated to about 60 °C or higher to prepare an aqueous vanadium solution. In this case, in order to increase the solubility of ammonium metavanadate, oxalic acid ((COOH)$_2$) was added to the aqueous vanadium solution, and in this case, a molar ratio of oxalic acid to vanadium was 1:1.

Subsequently, manganese(II) nitrate hydrate ((Mn(NO$_3$)$_2$XH$_2$O)), which is a manganese precursor, was quantified so that the manganese (Mn) content became 0.81 wt% based on the total weight of the catalyst, and then the manganese precursor was dissolved in distilled water to prepare an aqueous manganese solution. The calcined antimony-titania was added to the aqueous vanadium solution and the aqueous manganese solution, and mixed to prepare a slurry, and the moisture was then removed by using a vacuum rotary evaporator. In addition, in order to completely remove the moisture contained in the micropores, the slurry was sufficiently dried in a 103 °C-dryer for about 24 hours or longer.

Thereafter, the mixture was calcined in the convection-type furnace at about 500 °C in an air atmosphere for about 5 hours to fabricate "3V-0.81Mn/3Sb/TiO$_2$." In "3V-0.81Mn/3Sb/TiO$_2$", 3V means 3 wt% of vanadium, 0.81Mn means 0.81 wt% of manganese, and 3Sb means 3 wt% of antimony. TiO$_2$ means a titania carrier.

<Fabrication Example 2>

"3V-1.62Mn/3Sb/TiO$_2$" was fabricated in the same manner as in Fabrication Example 1, except that the aqueous manganese solution was prepared so that the manganese content became 1.62 wt% based on the total weight of the catalyst in the process of preparing the aqueous manganese solution of Fabrication Example 1. In "3V-1.62Mn/3Sb/TiO$_2$," 1.62Mn means 1.62 wt% of manganese.

<Fabrication Example 3>

"3V-3.24Mn/3Sb/TiO$_2$" was fabricated in the same manner as in Fabrication Example 1, except that the aqueous manganese solution was prepared so that the manganese content became 3.24 wt% based on the total weight of the catalyst in the process of preparing the aqueous manganese solution of Fabrication Example 1. In "3V-3.24Mn/3Sb/TiO$_2$," 3.24Mn means 3.24 wt% of manganese.

<Fabrication Example 4>

"3V-4.85Mn/3Sb/TiO$_2$" was fabricated in the same manner as in Fabrication Example 1, except that the aqueous manganese solution was prepared so that the manganese content became 4.85 wt% based on the total weight of the catalyst in the process of preparing the aqueous manganese solution of Fabrication Example 1. In "3V-4.85Mn/3Sb/TiO$_2$," 4.85Mn means 4.85 wt% of manganese.

<Fabrication Example 5>

"3V-9.72Mn/3Sb/TiO$_2$" was fabricated in the same manner as in Fabrication Example 1, except that the aqueous manganese solution was prepared so that the manganese content became 9.72 wt% based on the total weight of the catalyst in the process of preparing the aqueous manganese solution of Fabrication Example 1. In "3V-9.72Mn/3Sb/TiO$_2$," 9.72Mn means 9.72 wt% of manganese.

<Fabrication Example 6>

"3V-14.57Mn/3Sb/TiO$_2$" was fabricated in the same manner as in Fabrication Example 1, except that the aqueous manganese solution was prepared so that the manganese content became 14.57 wt% based on the total weight of the catalyst in the process of preparing the aqueous manganese solution of Fabrication Example 1. In "3V-14.57Mn/3Sb/TiO$_2$," 14.57Mn means 14.57 wt% of manganese.

<Fabrication Example 7>

"3V-19.42Mn/3Sb/TiO$_2$" was fabricated in the same manner as in Fabrication Example 1, except that the aqueous manganese solution was prepared so that the manganese content became 19.42 wt% based on the total weight of the catalyst in the process of preparing the aqueous manganese solution of Fabrication Example 1. In "3V-19.42Mn/3Sb/TiO$_2$," 19.42Mn means 19.42 wt% of manganese.

<Fabrication Example 8>

"3V-1.62Mn-3Sb/TiO$_2$" was fabricated in the same manner as in Fabrication Example 2, except that the aqueous vanadium solution, the aqueous manganese solution, and the aqueous antimony solution were added to the titania slurry instead of first preparing antimony-titania in the process of fabricating the V-Mn-Sb-TiO$_2$ catalyst for eliminating nitrogen oxides.

<Comparative Fabrication Example 1>

In the fabrication of a V-TiO$_2$ catalyst for eliminating nitrogen oxides, ammonium metavanadate (NH$_4$VO$_3$), which is a vanadium precursor, was quantified so that the vanadium (V) content became 3 wt% based on the total weight of the catalyst, and then the vanadium precursor was dissolved in distilled water heated to about 60 °C or higher to prepare an aqueous vanadium solution. In this case, in order to increase the solubility of ammonium metavanadate, oxalic acid ((COOH)$_2$) was added to the aqueous vanadium solution, and in this case, a molar ratio of oxalic acid to vanadium was 1:1. The prepared aqueous vanadium solution was mixed with titania to prepare a slurry, and the moisture was then removed by using a vacuum rotary evaporator. In addition, in order to completely remove the moisture contained in the micropores, the slurry was sufficiently dried in a 103 °C-dryer for about 24 hours or longer. Thereafter, the mixture was calcined in the convection-type furnace at about 500 °C in an air atmosphere for about 5 hours to fabricate "3V/TiO$_2$."

<Comparative Fabrication Example 2>

In the fabrication of a V-W-TiO$_2$ catalyst for eliminating nitrogen oxides, ammonium metatungstate ((NH$_4$)$_6$H$_2$W$_{12}$O$_{40}$), which is a tungsten precursor, was quantified so that the tungsten content became 5 wt% based on the total weight of the catalyst, and then the tungsten precursor was dissolved in distilled water heated to about 60 °C or higher to prepare an aqueous tungsten solution.
Subsequently, ammonium metavanadate (NH$_4$VO$_3$), which is a vanadium precursor, was quantified so that the vanadium (V) content became 3 wt% based on the total weight of the catalyst, and then the vanadium precursor was dissolved in distilled water heated to about 60 °C or higher to prepare an aqueous vanadium solution. In this case, in order to increase the solubility of ammonium metavanadate, oxalic acid ((COOH)$_2$) was added to the aqueous vanadium solution, and in this case, a molar ratio of oxalic acid to vanadium was 1:1.
The prepared aqueous tungsten solution and the aqueous vanadium solution were mixed to prepare a slurry, and the moisture was then removed by using a vacuum rotary evaporator. In addition, in order to completely remove the moisture contained in the micropores, the slurry was sufficiently dried in a 103 °C-dryer for about 24 hours or longer. Finally, the slurry was calcined in the convection-type furnace at about 500 °C in an air atmosphere for about 5 hours to fabricate "3V-5W/TiO$_2$." In "3V-5W/TiO$_2$," 5W means 5 wt% of tungsten.

<Comparative Fabrication Example 3>

In the fabrication of a V-Sb-TiO$_2$ catalyst for eliminating nitrogen oxides, antimony acetate (Sb(CH$_3$COO)$_3$), which is an antimony precursor, was quantified so that the antimony (Sb) content became 3 wt% based on the total weight of the catalyst, and then the antimony precursor was dissolved in acetic acid (CH$_3$COOH) to prepare an aqueous antimony solution. The prepared aqueous antimony solution was mixed with titania to prepare a slurry, moisture was removed using a vacuum rotary evaporator, and the slurry was sufficiently dried in a 103 °C-dryer for about 24 hours or longer in order to completely remove the moisture contained in micropores.
Then, the dried slurry was calcined in a convention-type furnace at about 200 °C in an air atmosphere for about 5 hours to prepare antimony-titania (hereinafter, 3Sb/TiO$_2$, which means that antimony is added to the titania carrier at 3 wt% based on the total weight of the catalyst, and 3Sb means 3 wt% of antimony).

Subsequently, "3W3Sb/TiO$_2$" was fabricated in the same manner as in Comparative Fabrication Example 1, except that an antimony-titania slurry was used instead of the titania slurry in the process of adding the aqueous vanadium solution.

<Comparative Fabrication Example 4>

"3V-1.62Mn/TiO$_2$" was fabricated in the same manner as in Fabrication Example 2, except that when the aqueous vanadium solution and the aqueous manganese solution were supported, the solutions were added to the titania slurry instead of antimony-titania in the process of fabricating a V-Mn-TiO2 catalyst for eliminating nitrogen oxides.

The catalysts fabricated by Fabrication Examples, and the contents of vanadium, manganese, and antimony supported on the catalysts are summarized in Table 1 below:

[Table 1]

| Division | Vanadium content (wt%) | Manganese content (wt%) | Antimony content (wt%) | Catalyst |
|---|---|---|---|---|
| Fabrication Example 1 | 3 | 0.81 | 3 | 3V-0.81Mn/3Sb/TiO$_2$ |
| Fabrication Example 2 | 3 | 1.62 | 3 | 3V-1.62Mn/3Sb/TiO$_2$ |
| Fabrication Example 3 | 3 | 3.24 | 3 | 3V-3.24Mn/3Sb/TiO$_2$ |
| Fabrication Example 4 | 3 | 4.85 | 3 | 3V-4.85Mn/3Sb/TiO$_2$ |
| Fabrication Example 5 | 3 | 9.72 | 3 | 3V-9.72Mn/3Sb/TiO$_2$ |
| Fabrication Example 6 | 3 | 14.57 | 3 | 3V-14.57Mn/3Sb/TiO$_2$ |
| Fabrication Example 7 | 3 | 19.42 | 3 | 3V-19.42Mn/3Sb/TiO$_2$ |
| Fabrication Example 8 | 3 | 1.62 | 3 | 3V-1.62Mn-3Sb/TiO$_2$ |
| Comparative Fabrication Example 1 | 3 | - | - | 3V/TiO$_2$ |
| Comparative Fabrication Example 2 | 3 | - | - | 3V-5W/TiO$_2$ |
| Comparative Fabrication Example 3 | 3 | - | 3 | 3V/3Sb/TiO$_2$ |
| Comparative Fabrication Example 4 | 3 | 1.62 | - | 3V-1.62Mn/TiO$_2$ |

<Catalyst Evaluation Example 1>

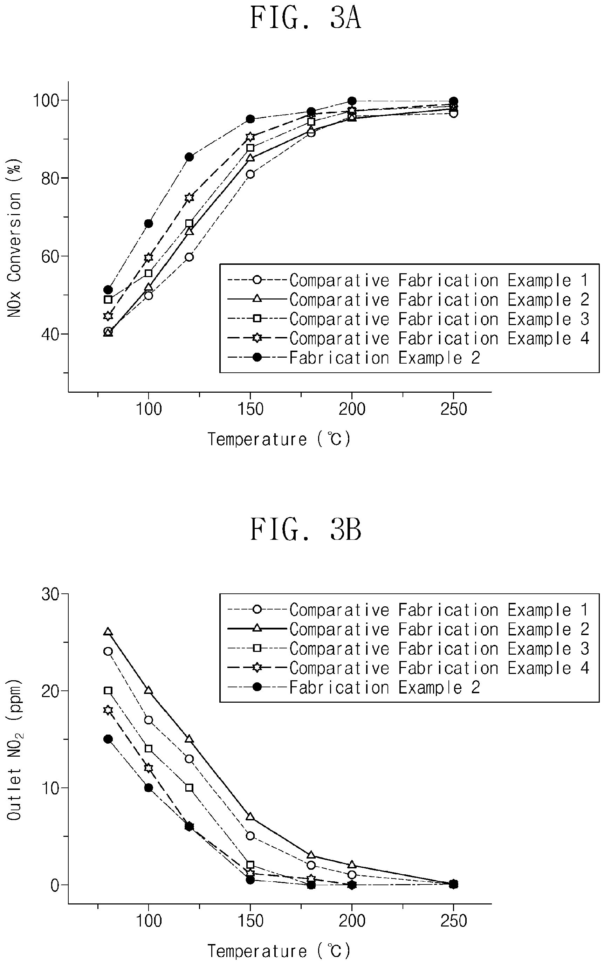

In order to confirm the efficiency of eliminating nitrogen oxides in the catalyst fabrication of the inventive concept, the conversion of NOx was measured in order to evaluate the SCR reaction characteristics under the condition of about 60,000 hr$^{-1}$ of the space velocity for the catalysts fabricated according to Fabrication Example 2 and Comparative Fabrication Examples 1 to 4, and the results are shown in FIGS. 3A and 3B below. Here, FIG. 3A shows the NOx conversion, and FIG. 3B shows the concentration (ppm) of NO$_2$ as measured at the outlet of the catalyst reactor.

[Experimental condition]

In an air atmosphere, a gas was inj ected into a catalyst reactor including each of catalysts fabricated according to Fabrication Example 2 and Comparative Fabrication Examples 1 to 4. The gas includes nitrogen oxides, ammonia, oxygen, and moisture. The concentration of nitrogen oxides (NOx) in the gas was about 75 ppm (equivalent ratio of $NO:NO_2$ was about 4:6). The ammonia content in the gas corresponds to the amount in which the equivalent ratio of nitrogen oxides (NOx) to $NH_3$ is about 1:1. Oxygen was about 3 vol% and moisture was about 6 vol% in the gas. The gas inflow flow rate was about 500 cc/min, the space velocity was about 60,000 hr$^{-1}$, and the experimental temperature range was about 80 °C to about 250 °C. For reference, the space velocity is an index indicating the amount of a target gas that the catalyst can treat and is expressed as a volume ratio of the catalyst to the total gas flow rate.

[Measurement method]

The gaseous nitrogen oxide conversion was calculated according to Equation 1 below. In addition, the nitrogen conversion was calculated by measuring, with a non-dispersive infrared gas analyzer, ZKJ-2 (Fuji Electric Co.), the concentration of nitrogen monoxide generated by the unreacted gaseous nitrogen oxides which is injected. Additionally, the concentrations of the gaseous ammonia and NOz were measured using a detector tube to measure NOz produced by the oxidation of $NH_3$ slip and NOz slip or NO produced by the unreacted gaseous ammonia injected as a reducing agent.

[Equation 1]

$$\text{Nitrogen oxide removal (\%)} = \frac{\text{Inlet NOx(ppm)} - \text{outlet NOx(ppm)}}{\text{Inlet NOx(ppm)}} \text{X100}$$

Referring to FIGS. 3A and 3B, through a nitrogen oxide removal ratio under the condition in which the equivalent ratio of NO and NOz is 4:6 in Comparative Fabrication Examples 1 to 4 and Fabrication Example 2, it may be confirmed that antimony and/or manganese were added to Comparative Fabrication Example 1 ($3V/TiO_2$), thereby improving the overall low-temperature denitrification efficiency. Among them, when the Mn content was at least 1.62 wt% (Fabrication Example 2), excellent nitrogen oxide conversion was shown at about 250 °C or lower. In particular, it may be seen that in the case of Comparative Fabrication Example 2 (3V-SW/TiOz), which is a mimetic catalyst of a commercial catalyst, about 7 ppm of NOz was measured at about 150 °C, whereas in the case of Fabrication Example 2, the concentration of $NO_2$ was close to 0.

<Catalyst Evaluation Example 2>

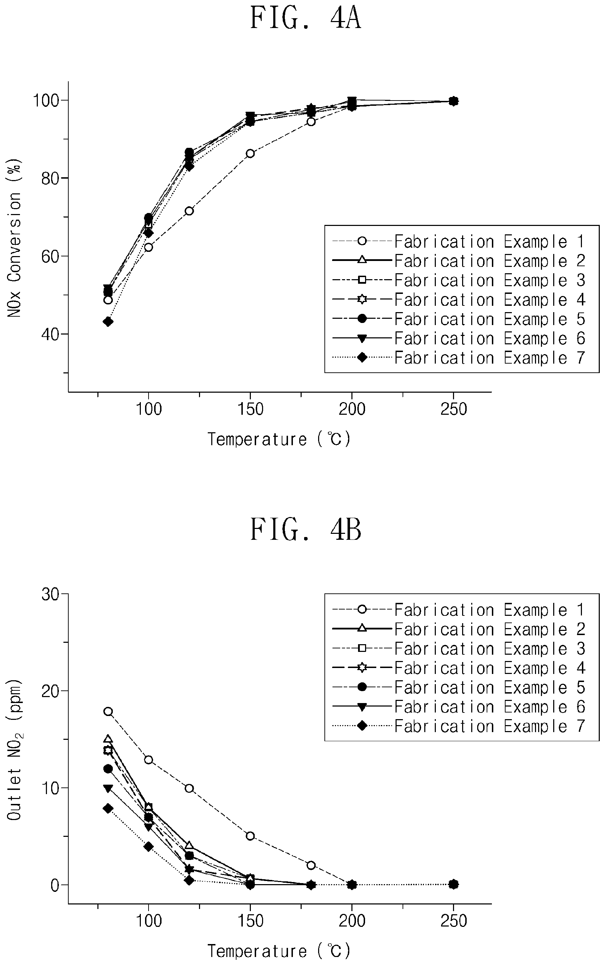

In FIGS. 4A and 4B, the nitrogen oxide removal ratios of Fabrication Examples 1 to 7 were evaluated. Fabrication Examples 1 to 7 are a catalyst group fabricated according to the manganese content in the V-Mn-Sb-$TiO_2$ catalyst. The evaluation was performed under the same reaction conditions as in Example 1, and the NOx conversion is shown in FIG. 4A, and the concentration of $NO_2$ measured at the outlet of the catalyst reactor is shown in FIG. 4B. As can be seen from FIG. 4A, it may be seen that the catalyst group fabricated by supporting the manganese of about 1.62 wt% or more exhibits excellent denitrification efficiency at about 250 °C or lower. As can be seen from FIG. 3B, when the manganese content is about 1.62 wt% or more, the concentration of $NO_2$ discharged is close to 0 ppm at about 150 °C or higher, and the concentration of $NO_2$ is within about 10 ppm even at about 100 °C.

<Catalyst Evaluation Example 3>

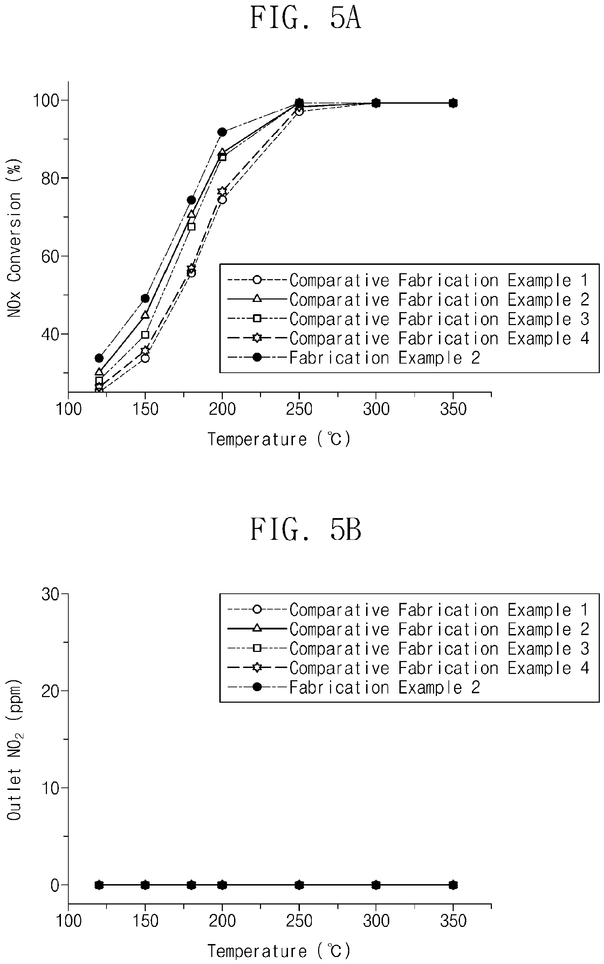

In FIGS. 5A and 5B, with respect to Fabrication Example 2 and Comparative Fabrication Examples 1 to 4, a nitrogen oxide removal ratio under the condition in which the equivalent ratio of NO and NOz is about 9:1 (general standard SCR conditions) was evaluated. The NOx conversion is shown in FIG. 5A, and the concentration of $NO_2$ measured at the outlet of the catalyst reactor is shown in FIG. 5B. As can be seen from FIG. 5A, it may be seen that Fabrication Example 2 (3V-1.62Mn/3Sb/$TiO_2$) exhibited the best denitrification performance in a low temperature range of about 250 °C or lower. Specifically, it is confirmed that the low-temperature denitrification performance is exhibited in the order of Fabrication Example 2 (3V-1.62Mn/3Sb/$TiO_2$), Comparative Fabrication Example 2 (3V-5W/$TiO_2$), Comparative Fabrication Example 3 (3V/3Sb/$TiO_2$), Comparative Fabrication Example 4 (3V-1.62Mn/$TiO_2$), and Comparative Fabrication Example 1 (3V/$TiO_2$) on the basis of about 180 °C. In addition, as can be seen from FIG. 5B, it may be seen that the concentration of $NO_2$ discharged is 0 ppm at about 120 °C to about 350 °C.

[Experiment condition]

In an air atmosphere, a gas was injected into a catalyst reactor including each of catalysts fabricated according to Fabrication Example 2 and Comparative Fabrication Examples 1 to 4. The gas includes nitrogen oxides, ammonia, oxygen, and moisture. The concentration of nitrogen oxides (NOx) in the gas was about 132 ppm (equivalent ratio of $NO:NO_2$ was about 9:1). The ammonia content in the gas corresponds to the amount in which the equivalent ratio of nitrogen oxides (NOx) to $NH_3$ is about 1:1. Oxygen was about 3 vol% and moisture was about 6 vol% in the gas. The gas inflow flow rate was about 500 cc/min, the space velocity was about 60,000 $hr^{-1}$, and the experimental temperature range was about 120 °C to about 350 °C.

<Catalyst Evaluation Example 4>

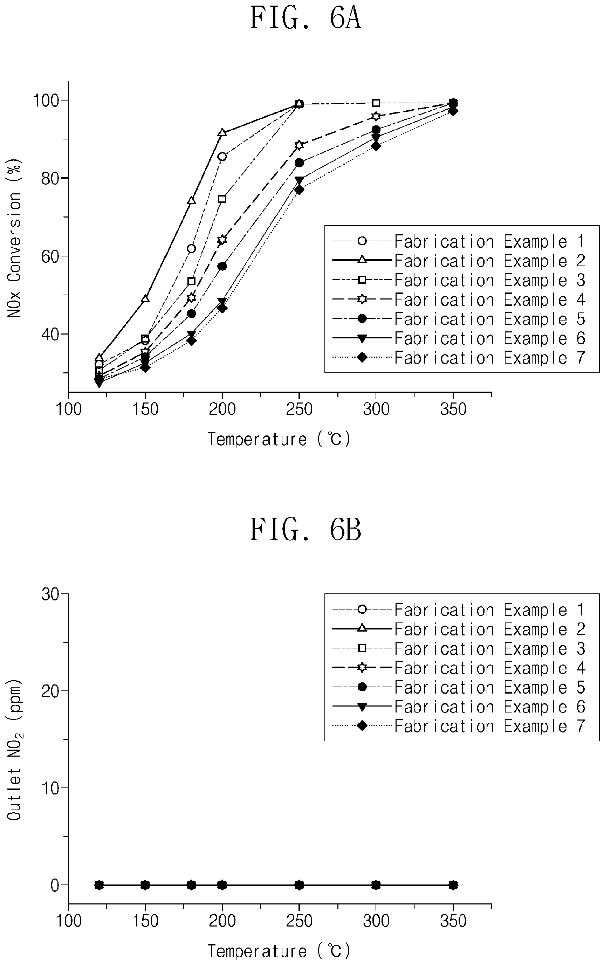

In FIGS. 6A and 6B, with respect to Fabrication Example 1 to 7, a nitrogen oxide removal ratio under the condition in which the equivalent ratio of NO and NOz is about 9:1 (general standard SCR conditions) was evaluated. The NOx conversion is shown in FIG. 6A, and the concentration of $NO_2$ measured at the outlet of the catalyst reactor is shown in FIG. 6B. As can be seen from FIG. 6A, it may be seen that Fabrication Example 2 (3V-1.62Mn/3Sb/TiO$_2$) exhibited the best denitrification performance at about 350 °C or lower. In more detail, it was seen that the denitrification performance of Fabrication Example 2 (3V-1.62Mn/3Sb/TiO$_2$) was exhibited the best on the basis of about 180 °C. In this case, it may be seen that when the manganese content is greater or less than about 1.62 wt%, the denitrification performance decreases gradually. The reason why the denitrification performance gradually decreases when the manganese content exceeds about 1.62 wt% is interpreted to be due to the reduction of the active site by the partial aggregation of Mn on the catalyst surface, as shown in Table 2 below. In addition, as can be seen from FIG. 5B, it may be seen that the concentration of NOz discharged is 0 ppm at about 120 °C to about 350 °C. Overall, it is thought that the catalyst fabricated by Fabrication Example 2 in the equivalent ratio of NO and NOz of about 4:6 to about 9:1 exhibits excellent denitrification efficiency under the two conditions as mentioned above.

<Catalyst Evaluation Example 5>

In the catalyst fabrication of the inventive concept, a specific surface area analysis (nitrogen physisorption; BET; Brunauer-Emmett-Teller method) was performed on the catalysts fabricated according to Fabrication Examples 1 to 7 and Comparative Fabrication Examples 1 and 3, and the results are shown in Table 2.

[Table 2]

| Division | Catalyst | Manganese content (wt%) | Specific surface area (m$^2$/g) |
|---|---|---|---|
| Fabrication Example 1 | 3V-0.81Mn/3Sb/TiO$_2$ | 0.81 | 69.1 |
| Fabrication Example 2 | 3V-1.62Mn/3Sb/TiO$_2$ | 1.62 | 72.1 |
| Fabrication Example 3 | 3V-3.24Mn/3Sb/TiO$_2$ | 3.24 | 59.1 |
| Fabrication Example 4 | 3V-4.85Mn/3Sb/TiO$_2$ | 4.85 | 61.1 |
| Fabrication Example 5 | 3V-9.72Mn/3Sb/TiO$_2$ | 9.72 | 54.7 |
| Fabrication Example 6 | 3V-14.57Mn/3Sb/TiO$_2$ | 14.57 | 54.7 |
| Fabrication Example 7 | 3V-19.42Mn/3S/TiO$_2$ | 19.42 | 48.4 |
| Comparative Fabrication Example 1 | 3V/TiO$_2$ | - | 56.0 |
| Comparative Fabrication Example 3 | 3V/3Sb/TiO$_2$ | - | 69.1 |

Referring to Table 2, the specific surface area between about 50 m$^2$/g and about 75 m$^2$/g is shown with respect to the overall catalyst, and particularly, Fabrication Example 2 (3V-1.62Mn/3Sb/TiO$_2$) has an excellent specific surface

area of 70 m$^2$/g or more.

<Catalyst Evaluation Example 6>

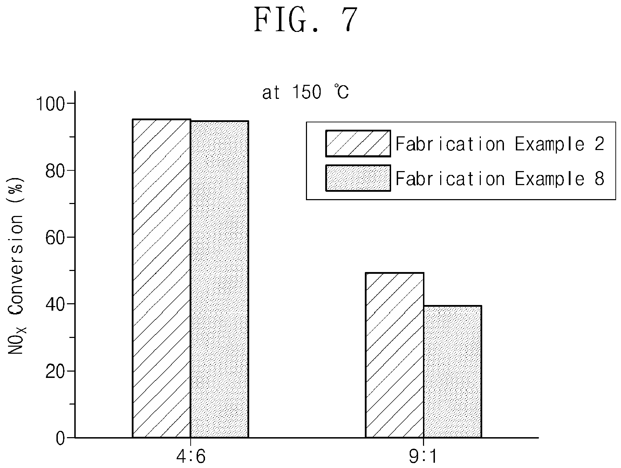

FIG. 7 shows the results of comparing the denitrification efficiency in the conditions of NO and NO$_2$ equivalent ratio of 4:6 (the condition in which NO$_2$ is injected in excess) and 9:1 (the general standard SCR condition) for Fabrication Examples 2 and 8. Fabrication Examples 2 and 8 are catalyst groups with the same type and content of the metals constituting the catalyst, but have a difference in fabrication method. In the case of Fabrication Example 2, antimony and titania were first supported and heat-treated, and then vanadium and manganese were supported, and in the case of Fabrication Example 8, vanadium, manganese and antimony were supported on titania at once. FIG. 7 shows the denitrification efficiency at 150 °C according to each equivalent ratio of NO and NO$_2$. When the equivalent ratio of NO and NO$_2$ is 4:6, it is confirmed that there was no difference in denitrification performance according to the fabrication method, and when the equivalent ratio is 9:1, it is confirmed that the catalyst of Fabrication Example 2 in which antimony and titania have first been supported has better denitrification performance. For Fabrication Examples 2 and 8 fabricated according to the same metal composition but different heat-treatment methods, there is no difference in denitrification performance when the equivalent ratio of NO and NO$_2$ is 4:6, but it is confirmed that Fabrication Example 2 has denitrification efficiency superior to Fabrication Example 8 under the standard SCR condition, the equivalent ratio of 9:1.

<Catalyst Evaluation Example 7>

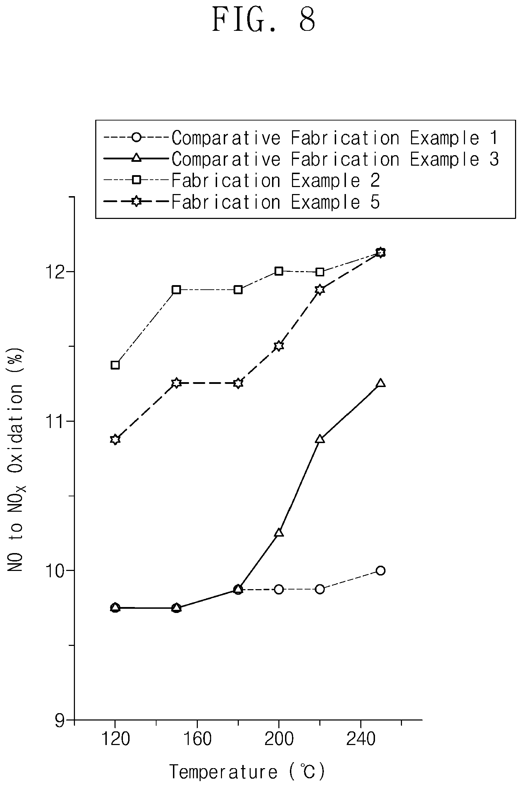

In the fabrication of the catalyst of the inventive concept, the oxidation rate from NO to NO$_2$ was evaluated. In this case, the case (3V/3Sb/TiO$_2$) of adding antimony, as a cocatalyst, to the V-TiO$_2$ catalyst (Comparative Fabrication Example 1, 3V/TiO$_2$), Fabrication Example 2 (3V-1.62Mn/3Sb/TiO$_2$), to which an appropriate content of manganese was added, and Fabrication Example 5 (3V-9.72Mn/3Sb/TiO$_2$), a catalyst group in which a specific surface area was reduced due to supporting at least a certain amount of Mn, were selected, and a NO oxidation reaction was performed, and the results are shown in FIG. 8.

[Experimental condition]

The gas injected into the catalyst reactor was tested in an air atmosphere under the conditions of the concentration of the gaseous nitrogen oxide of about 800 ppm (the experiment was carried out by increasing the concentration in order to distinguish the oxidation rate from NO to NO$_2$), oxygen of about 3%, an inflow flow rate of about 500 cc/min, a space velocity of about 30,000 hr$^{-1}$, and an experimental temperature range of about 120 °C to about 250 °C.

Referring to FIG. 8, with respect to NO oxidation rates for Comparative Fabrication Examples 1 and 3, and Fabrication Examples 2 and 5, the NO oxidation rate is increased at about 200 °C or higher after the addition of antimony, and in addition, Fabrication Example 2 (3V-1.62Mn/Sb/TiO$_2$), into which 1.62 wt% of Mn was introduced, showed the best NO oxidation rate, and Fabrication Example 5 (3V-9.72Mn/3Sb/TiO$_2$), in which more content of Mn was supported, showed rather relatively low NO oxidation rate. In the above results, the increase in the oxidation rate from NO to NO$_2$ of the catalyst may improve the "Fast SCR" reaction under the condition that the equivalent ratio of NO and NO$_2$ is 9:1, and as a result, excellent low-temperature denitrification performance may be exhibited.

<Catalyst Evaluation Example 8>

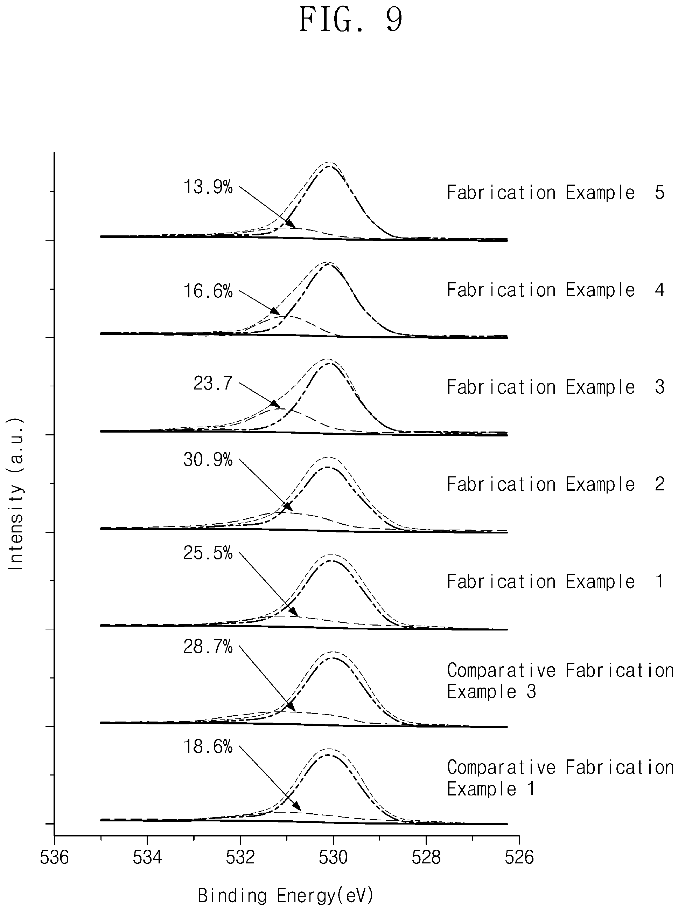

With respect to the catalysts fabricated according to Fabrication Examples 1 to 5, and Comparative Fabrication Examples 1 and 3, the XPS results of O 1s were analyzed and shown in FIG. 9. O 1s peak in FIG. 9 was deconvoluted in three regions. From the left, oxygen species (O'$\alpha$) derived from surface-adsorbed H$_2$O, surface chemisorption oxygen species (O$\alpha$), and lattice oxygen species (O$\beta$) are shown. Referring to the results of FIG. 9, the ratio corresponding to the surface-adsorbed oxygen species (O$\alpha$) among the total oxygen species is shown. The surface-adsorbed oxygen species (O$\alpha$) is known as an oxygen species having excellent reactivity on the surface of the catalyst, and may affect the ability of oxygen used in the SCR reaction. With respect to the ratio of the surface-adsorbed oxygen species of the catalysts, Fabrication Example 2 (3V-1.62Mn/3Sb/TiO$_2$) shows 30.9%, Comparative Fabrication Example 3 (3V/3Sb/TiO$_2$) shows 28.7%, Fabrication Example 1 (3V-0.81Mn/3Sb/TiO$_2$) shows 25.5%, Fabrication Example 3 (3V-3.24Mn/3Sb/TiO$_2$) shows 23.7%, Comparative Fabrication Example 1 (3V/TiO$_2$) shows 18.6%, Fabrication Example 4 (3V-4.85Mn/3Sb/TiO$_2$) shows 16.6%, and Fabrication Example 5 (3V-9.72Mn/3Sb/TiO$_2$) shows 13.9%, and the order of the ratio of the surface-adsorbed oxygen follows as above. This ratio is confirmed to be similar to the order of performance results in the experiment in which the nitrogen oxide removal rate was evaluated under the condition that the equivalent ratio of NO and NO$_2$ is 9:1.

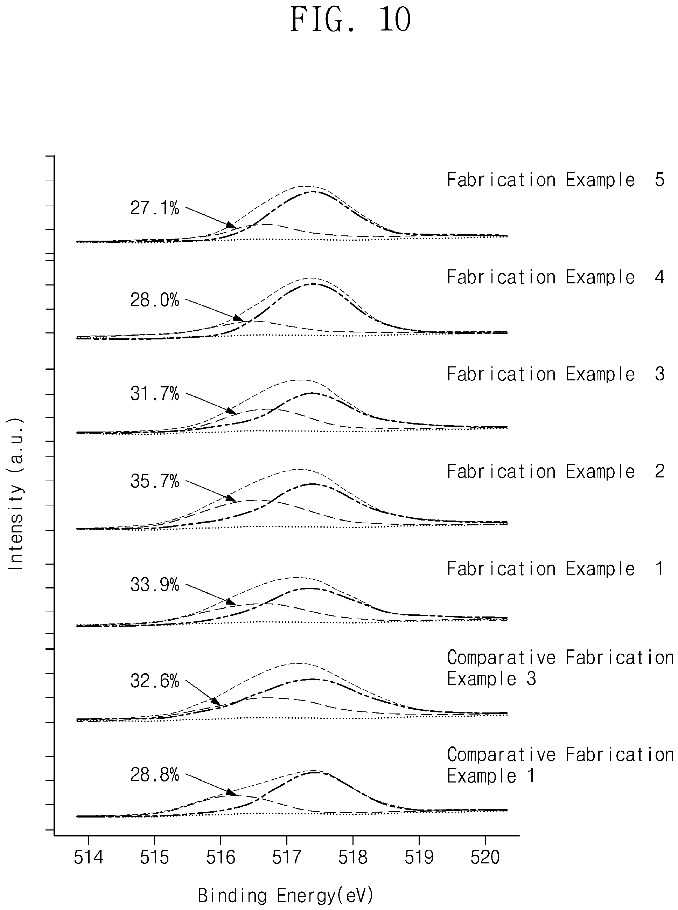

Then, the XPS results of V2p were analyzed for the catalysts fabricated according to Fabrication Examples 1 to 5 and Comparative Fabrication Examples 1 and 3, and the results are shown in FIG. 10. In the results of FIG. 10, the oxidation state of vanadium was divided into $V^{5+}$ and $V^{4+}$. The oxidation state of vanadium is stable when it is $V^{5+}$, and when vanadium is present as a species other than $V^{5+}$ (*e.g.*, $V^{4+}$), the vanadium may act as a defect active site, and thus the reactivity of the reactants in the air with the catalyst may be enhanced. The ratio of vanadium $V^{4+}$ having an oxidation number of 4+ to the total vanadium in vanadium oxide shows the following order: Fabrication Example 2 (3V-1.62Mn/3Sb/TiO$_2$; 35.7%) > Fabrication Example 1 (3V-0.81Mn/3Sb/TiO$_2$; 33.9%) > Comparative Fabrication Example 3 (3V/3Sb/TiO$_2$; 32.6%) > Fabrication Example 3 (3V-3.24Mn/3Sb/TiO$_2$; 31.7%) > Comparative Fabrication Example 1 (3V/TiO$_2$; 28.8%) > Fabrication Example 4 (3V-4.85Mn/3Sb/TiO$_2$; 32.8%) > Fabrication Example 5 (3V-9.72Mn/3Sb/TiO$_2$; 27.1%). It may be confirmed that similar to the tendency of O 1s, the ratio of vanadium $V^{4+}$ exhibited a similar tendency to the performance evaluation data of the nitrogen oxide removal ratio under the condition of NO and NO$_2$ equivalent ratio of 1:9.

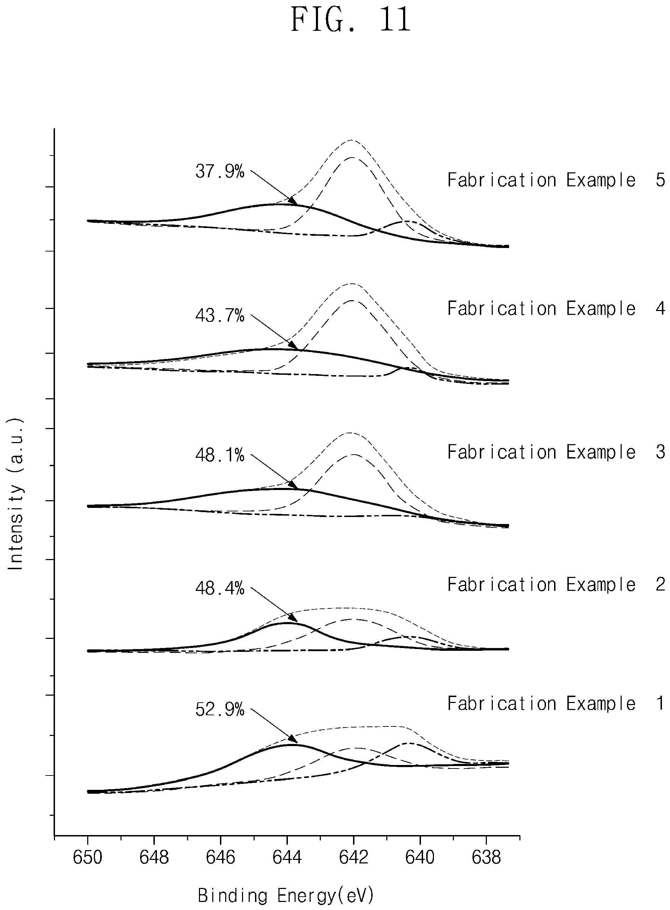

Next, the XPS results of Mn 2p were analyzed for the catalysts fabricated according to Fabrication Examples 1 to 5, and deconvoluted according to the Gaussian-Lorentzian method, and the results are shown in FIG. 11. FIG. 11 shows the ratio of manganese (Mn$^{4+}$) corresponding to the sum of the oxidation number of 4+ to the total manganese present on the catalyst surface. In FIG. 11, each peak was deconvoluted into Mn$^{4+}$, Mn$^{3+}$, Mn$^{2+}$ from the left. Referring to FIG. 11, Fabrication Example 1 (3V-0.81Mn/3Sb/TiO$_2$) shows 52.9%, Fabrication Example 2 (3V-1.62Mn/3Sb/TiO$_2$) shows 48.4%, Fabrication Example 3 (3V-3.24Mn/3Sb/TiOz) shows 48.1%, Fabrication Example 4 (3V-4.85Mn/3Sb/TiO$_2$) shows 43.7%, and Fabrication Example 5 (3V-9.72Mn/3Sb/TiO$_2$) shows 37.9%. Since the content of manganese contained in the catalyst is different, it is difficult to compare the absolute amount of manganese in the oxidation state, but Fabrication Example 2 exhibits the ratio of quadrivalent manganese of about 45% to about 50%, and exhibits excellent low-temperature denitrification performance under two conditions in which the equivalent ratio of NO and NO$_2$ is 9:1 and 4:6.

<Catalyst Evaluation Example 9>

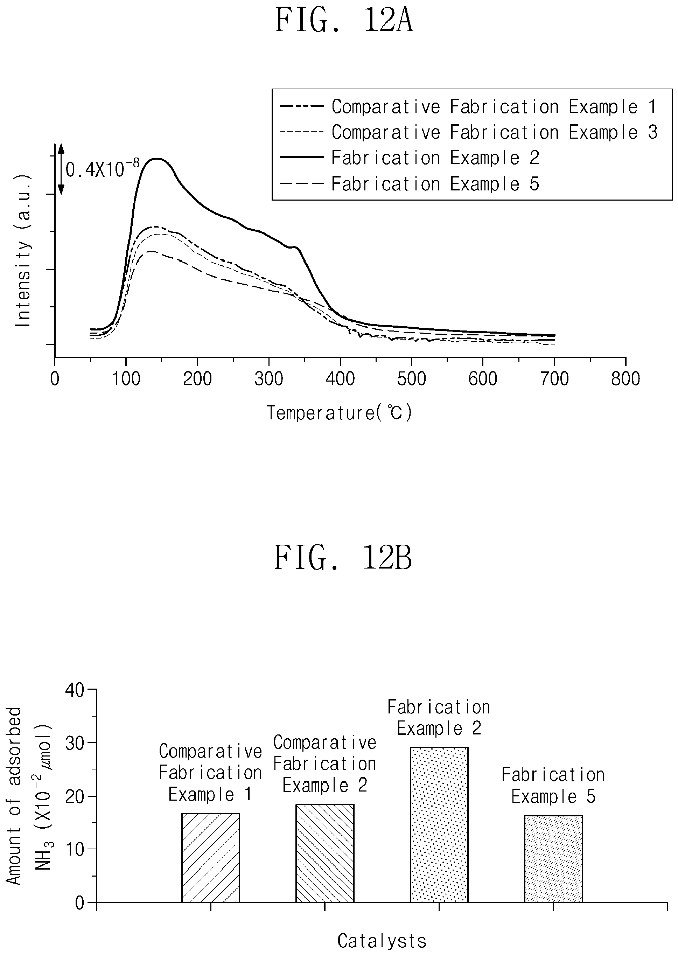

In the catalyst fabrication of the inventive concept, NH$_3$-TPD analysis was performed on the catalysts fabricated according to Fabrication Examples 2 and 5, and Comparative Fabrication Examples 1 and 3, and the results are shown in FIGS. 12A, 12B, and Table 3. FIG. 12A shows the NH$_3$-TPD profile of each catalyst, and FIG. 12B shows the desorption amount of NH$_3$ adsorbed on the catalysts measured in FIG. 12A as a bar graph. Comparative Fabrication Example 3 had an increase in a small amount of the ammonia adsorbed compared to Comparative Fabrication Example 1, exhibited a tendency to significantly increase the amount of NH$_3$ adsorbed (desorbed) due to the introduction of manganese, but exhibited a tendency to decrease the amount of NH$_3$ adsorbed (desorbed) by the addition of additional Mn on the basis of 1.62 wt% of manganese, and exhibited a similar tendency to the SCR denitrification performance at a low temperature. This may result from the effect of the aggregation phenomenon due to N$_2$ physisorption of manganese more than or equal to a certain amount.

<Catalyst Evaluation Example 10>

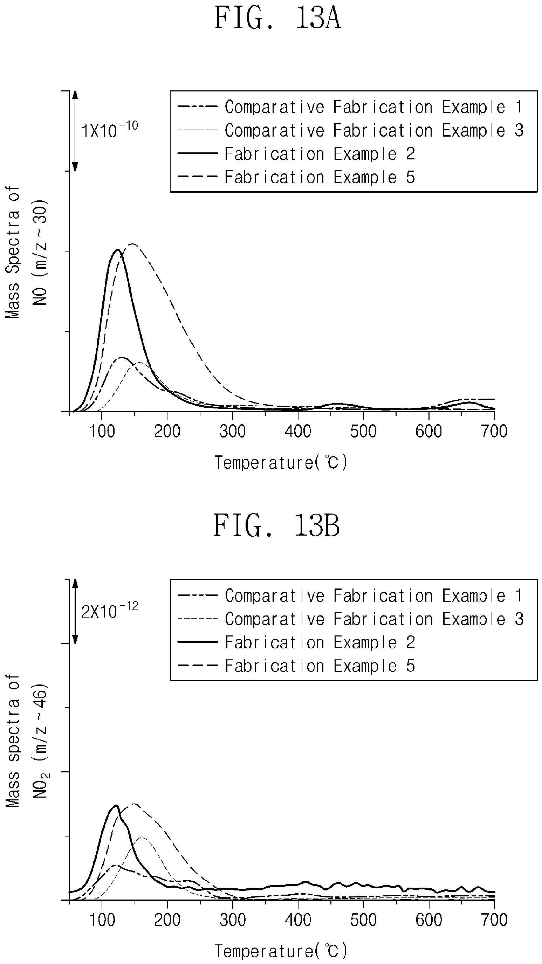

In the catalyst fabrication of the inventive concept, NO-TPD analysis was performed on the catalysts fabricated according to Fabrication Examples 2 and 5, and Comparative Fabrication Examples 1 and 3, and the results are shown in FIGS. 13A, 13B, and Table 3. FIGS. 13A and 13B are diagrams showing the amounts of NO and NO$_2$ desorbed (adsorbed) of each catalyst. Unlike the previous results, the addition of antimony showed the NO adsorption and desorption profile at low temperatures compared to the NO profile of Comparative Fabrication Example 1. It may be assumed/confirmed that this is because the adsorption and desorption binding energy of NO has weakened. In addition, it was confirmed that the addition of manganese significantly increased the adsorption amount of NO adsorbed (desorbed) to the catalyst, and is also capable of significantly increasing the amount of NO$_2$ oxidized in the catalyst itself. From these results, it may be confirmed that the catalyst, into which manganese was introduced, had an increase in the active site capable of adsorbing NO and NO$_2$.

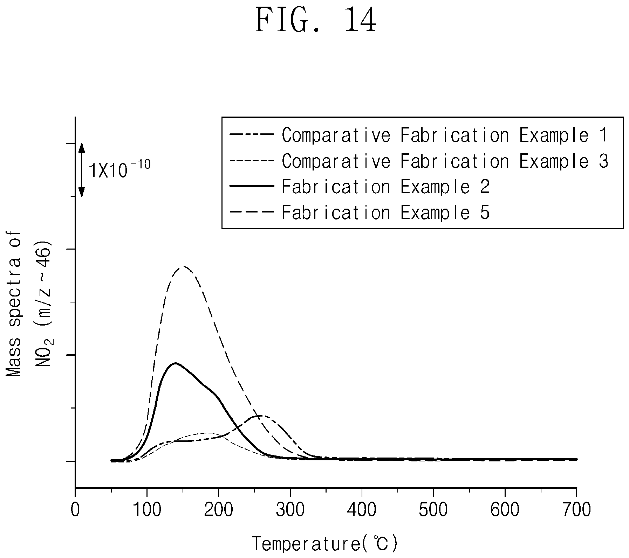

Subsequently, NO$_2$-TPD was performed to confirm the adsorption properties of NO$_2$, and the results are shown in FIG. 14 and Table 3. As a result, it was confirmed that the amount capable of adsorbing (desorbing) NO$_2$ increased due to the addition of antimony as compared to Comparative Fabrication Example 1 (3V/TiO$_2$). Additionally, it was confirmed that the addition of manganese significantly increased the active site of NO$_2$ that may be adsorbed to the catalyst.

The adsorption properties of NO or NO$_2$ may increase the adsorption capacity of NO$_2$ under the condition in which the NO:NO$_2$ equivalent ratio in the exhaust gas is 4:6, thereby increasing excellent low-temperature denitrification performance even when NO$_2$ is present in excess compared to NO at low temperatures.

[Table 3]

| Catalyst | $^aN_{NH3}$ ($\mu mol_{NH3}$ $g_{CAT}^{-1}$) | $^bN_{NO}$ ($\mu mol_{NO}$ $g_{CAT}^{-1}$) | $^bN_{NO2}$ ($\times 10^2 \mu mol_{NO2}$ $g_{CAT}^{-1}$) | $^cN_{NO2}$ ($\mu mol_{NO2}$ $g_{CAT}^{-1}$) |
|---|---|---|---|---|
| Comparative Fabrication Example 1 | 1,681 | 21.2 | 65.5 | 21.2 |
| Comparative Fabrication Example 3 | 1,849 | 26.1 | 62.5 | 42.2 |
| Fabrication Example 2 | 2,907 | 46.8 | 137.2 | 70.2 |
| Fabrication Example 5 | 1,621 | 78.7 | 121.9 | 142.1 |
| $^a$via NH$_3$-TPD, $^b$via NO-TPD, $^c$via NO$_2$-TPD | | | | |

The V-Mn-Sb-TiO$_2$ catalyst according to embodiments of the inventive concept may exhibit excellent performance of eliminating nitrogen oxides (NOx) in a low temperature range of about 200 °C or lower.

The method for fabricating a denitrification catalyst according to embodiments of the inventive concept may prepare a V-Mn-Sb-TiO$_2$ catalyst exhibiting excellent performance of eliminating nitrogen oxides (NOx) in a low temperature range of about 200 °C or lower.

The heat recovery steam generator according to embodiments of the inventive concept has excellent performance of eliminating yellow plume.

The method of eliminating yellow plume according to embodiments of the inventive concept may eliminate yellow plume well by eliminating nitrogen oxides (NOx) well in a low temperature region of about 200 °C or lower.

Although the embodiments of the inventive concept are described with reference to the accompanying drawings, those with ordinary skill in the technical field to which the inventive concept pertains will understand that the present disclosure can be carried out in other specific forms without changing the technical idea or essential features. Thus, the above-described embodiments are to be considered illustrative and not restrictive to all aspects.

**Claims**

1.   A V-Mn-Sb-TiO$_2$ catalyst which is supported with vanadium, manganese, and antimony on a titania carrier and is used as a denitrification catalyst for eliminating nitrogen oxides,

wherein the vanadium is contained in an amount of about 1 wt% to about 5 wt% with respect to the total weight of the catalyst,

the manganese is contained in an amount of about 0.5 to about 20 wt% with respect to the total weight of the catalyst, and

the antimony is contained in an amount of about 0.5 wt% to about 5 wt% with respect to the total weight of the catalyst.

2.   The V-Mn-Sb-TiO$_2$ catalyst of claim 1, wherein the vanadium is bonded to the catalyst in the form of vanadium oxide, and the vanadium oxide is at least one of VO$_2$ or V$_2$O$_5$.

3.   The V-Mn-Sb-TiO$_2$ catalyst of claim 1, wherein the manganese is bonded to the catalyst in the form of manganese oxide, and the manganese oxide is at least one of MnO$_2$, Mn$_2$O$_3$, or MnO.

4.   The V-Mn-Sb-TiO$_2$ catalyst of claim 1, wherein the catalyst further contains oxygen species, and in the oxygen species, surface oxygen species disposed on the surface of the catalyst is about 30% to about 35% with respect to the total oxygen species.

5.   A method for fabricating a V-Mn-Sb-TiO$_2$ catalyst, the method comprising:

preparing an aqueous antimony solution containing an antimony precursor;

mixing the aqueous antimony solution with titania and then drying the mixture to form an antimony-titania compound;
preparing an aqueous vanadium solution containing a vanadium precursor;
preparing an aqueous manganese solution containing a manganese precursor; and
mixing the aqueous vanadium solution and the aqueous manganese solution with the antimony-titania compound
to prepare a slurry, and drying and calcining the slurry.

6. The method of claim 5, wherein the antimony precursor is antimony triacetate ($Sb(CH_3COO)_3$),

the vanadium precursor is ammonium metavanadate ($NH_4VO_3$), and
the manganese precursor is manganese(II) nitrate hydrate ($(Mn(NO_3)_2XH_2O)$),
wherein the antimony precursor is contained so that the antimony content is about 0.5 wt% to about 5 wt% with
respect to the total weight of the catalyst,
the vanadium precursor is contained so that the vanadium content is about 1 wt% to about 5 wt% with respect
to the total weight of the catalyst, and
the manganese precursor is contained so that the manganese content is about 0.5 wt% to about 20 wt% with
respect to the total weight of the catalyst.

7. The method of claim 6, further comprising adding oxalic acid to the aqueous vanadium solution before the preparing
of the aqueous manganese solution.

8. The method of claim 6, wherein the calcining is performed in a furnace in a gas atmosphere containing nitrogen
and oxygen at about 400 °C to about 600 °C for about 0.5 hours to about 5 hours.

9. A heat recovery steam generator comprising:

a chamber that is disposed between a gas turbine and a chimney and comprises an inlet through which an
exhaust gas supplied from the gas turbine is injected, and an outlet through which the exhaust gas is discharged
to the chimney;
a first reducing agent injection nozzle disposed to be adjacent to the inlet in the chamber and configured to
inject a non-ammonia-based reducing agent;
a denitrification catalyst part disposed to be adjacent to the outlet in the chamber; and
a second reducing agent injection nozzle disposed between the denitrification catalyst part and the first reducing
agent injection nozzle in the chamber, and configured to inject an ammonia-based reducing agent,
wherein the denitrification catalyst part comprises a denitrification catalyst formed of a titania carrier on which
vanadium, manganese, and antimony are supported,
the vanadium is contained in an amount of about 1 wt% to about 5 wt% with respect to the total weight of the
catalyst,
the manganese is contained in an amount of about 0.5 wt% to about 20 wt% with respect to the total weight of
the catalyst, and
the antimony is contained in an amount of about 0.5 wt% to about 5 wt% with respect to the total weight of the
catalyst.

10. The heat recovery steam generator of claim 9, further comprising a first steam pipe disposed between the first
reducing agent injection nozzle and the second reducing agent injection nozzle in the chamber; and
a second steam pipe disposed between the denitrification catalyst part and the outlet.

11. The heat recovery steam generator of claim 9, wherein the non-ammonia-based reducing agent comprises at least
one of alkyl alcohol (ROH) or ethylene glycol,

the alkyl contains 1 to 10 carbon atoms, and
the ammonia-based reducing agent comprises at least one of ammonia, ammonia solution, urea, or urea solution.

12. The heat recovery steam generator of claim 8, wherein from a first time at which the heat recovery steam generator
is turned on to a second time at which the heat recovery steam generator is operated normally,

the amount of the non-ammonia-based reducing agent supplied through the first reducing agent injection nozzle
is gradually decreased, and
the amount of the ammonia-based reducing agent supplied through the second reducing agent injection nozzle remains constant.

13. The heat recovery steam generator of claim 12, wherein the amount of the non-ammonia-based reducing agent supplied at the first time corresponds to about 40% to about 60% of the equivalent of nitrogen dioxide contained in the exhaust gas.

14. The heat recovery steam generator of claim 12, wherein the amount of the ammonia-based reducing agent supplied at the first time corresponds to about 90% to about 100% of the sum of the equivalents of nitrogen dioxide and nitrogen monoxide contained in the exhaust gas.

15. The heat recovery steam generator of claim 12, wherein the temperature of the denitrification catalyst part at the first time is about 70 °C to about 200 °C, and the temperature of the denitrification catalyst part at the second time is about 350 °C to about 400 °C.

16. The heat recovery steam generator of claim 9, wherein the vanadium is bonded to the catalyst in the form of vanadium oxide, and the vanadium oxide is at least one of $VO_2$ or $V_2O_5$, and
the manganese is bonded to the catalyst in the form of manganese oxide, and the manganese oxide is at least one of $MnO_2$, $Mn_2O_3$, or MnO.

17. The heat recovery steam generator of claim 9, wherein the catalyst further contains oxygen species, and
in the oxygen species, surface oxygen species disposed on the surface of the catalyst is about 30% to about 35% with respect to the total oxygen species.

18. A method of eliminating yellow plume using the heat recovery steam generator according to claim 9, the method comprising:

at the first time at which the heat recovery steam generator is turned on, supplying the non-ammonia-based reducing agent through the first reducing agent injection nozzle so that the non-ammonia-based reducing agent corresponds to about 40% to about 60% of the equivalent of nitrogen dioxide contained in the exhaust gas, and supplying the ammonia-based reducing agent through the second reducing agent injection nozzle so that the ammonia-based reducing agent corresponds to about 90% to about 100% of the sum of the equivalents of nitrogen dioxide and nitrogen monoxide contained in the exhaust gas; and
at the second time at which the heat recovery steam generator is operated normally, stopping the supply of the non-ammonia-based reducing agent but keeping the amount of the ammonia-based reducing agent supplied.

19. The heat recovery steam generator of claim 18, further comprising gradually decreasing the amount of the non-ammonia-based reducing agent supplied from the first time to the second time.

20. The heat recovery steam generator of claim 18, wherein the temperature of the denitrification catalyst part at the first time is about 70 °C to about 200 °C, and
the temperature of the denitrification catalyst part at the second time is about 350 °C to about 400 °C.


**Amended claims in accordance with Rule 137(2) EPC.**

1. A V-Mn-Sb-TiO$_2$ catalyst which is supported with vanadium, manganese, and antimony on a titania carrier and is used as a denitrification catalyst for eliminating nitrogen oxides,

wherein the vanadium is contained in an amount of 1 wt% to 5 wt% with respect to the total weight of the catalyst, the manganese is contained in an amount of 0.5 to 20 wt% with respect to the total weight of the catalyst, and the antimony is contained in an amount of 0.5 wt% to 5 wt% with respect to the total weight of the catalyst.

2. The V-Mn-Sb-TiO$_2$ catalyst of claim 1, wherein the vanadium is bonded to the catalyst in the form of vanadium oxide, and the vanadium oxide is at least one of $VO_2$ or $V_2O_5$.

3. The V-Mn-Sb-TiO$_2$ catalyst of claim 1, wherein the manganese is bonded to the catalyst in the form of manganese oxide, and the manganese oxide is at least one of $MnO_2$, $Mn_2O_3$, or MnO.

**4.** The V-Mn-Sb-TiO$_2$ catalyst of claim 1, wherein the catalyst further contains oxygen species, and in the oxygen species, surface oxygen species disposed on the surface of the catalyst is 30% to 35% with respect to the total oxygen species.

**5.** A method for fabricating a V-Mn-Sb-TiO$_2$ catalyst, the method comprising:

preparing an aqueous antimony solution containing an antimony precursor;
mixing the aqueous antimony solution with titania and then drying the mixture to form an antimony-titania compound;
preparing an aqueous vanadium solution containing a vanadium precursor;
preparing an aqueous manganese solution containing a manganese precursor; and
mixing the aqueous vanadium solution and the aqueous manganese solution with the antimony-titania compound to prepare a slurry, and drying and calcining the slurry.

**6.** The method of claim 5, wherein the antimony precursor is antimony triacetate (Sb(CH$_3$COO)$_3$),

the vanadium precursor is ammonium metavanadate (NH$_4$VO$_3$), and
the manganese precursor is manganese(II) nitrate hydrate ((Mn(NO$_3$)$_2$XH$_2$O),
wherein the antimony precursor is contained so that the antimony content is 0.5 wt% to 5 wt% with respect to the total weight of the catalyst,
the vanadium precursor is contained so that the vanadium content is 1 wt% to 5 wt% with respect to the total weight of the catalyst, and
the manganese precursor is contained so that the manganese content is 0.5 wt% to 20 wt% with respect to the total weight of the catalyst.

**7.** The method of claim 6, further comprising adding oxalic acid to the aqueous vanadium solution before the preparing of the aqueous manganese solution.

**8.** The method of claim 6, wherein the calcining is performed in a furnace in a gas atmosphere containing nitrogen and oxygen at 400 °C to 600 °C for 0.5 hours to 5 hours.

**9.** A heat recovery steam generator comprising:

a chamber that is disposed between a gas turbine and a chimney and comprises an inlet through which an exhaust gas supplied from the gas turbine is injected, and an outlet through which the exhaust gas is discharged to the chimney;
a first reducing agent injection nozzle disposed to be adjacent to the inlet in the chamber and configured to inject a non-ammonia-based reducing agent;
a denitrification catalyst part disposed to be adjacent to the outlet in the chamber; and
a second reducing agent injection nozzle disposed between the denitrification catalyst part and the first reducing agent injection nozzle in the chamber, and configured to inject an ammonia-based reducing agent,
wherein the denitrification catalyst part comprises a denitrification catalyst formed of a titania carrier on which vanadium, manganese, and antimony are supported,
the vanadium is contained in an amount of 1 wt% to 5 wt% with respect to the total weight of the catalyst,
the manganese is contained in an amount of 0.5 wt% to 20 wt% with respect to the total weight of the catalyst, and
the antimony is contained in an amount of 0.5 wt% to 5 wt% with respect to the total weight of the catalyst.

**10.** The heat recovery steam generator of claim 9, further comprising a first steam pipe disposed between the first reducing agent injection nozzle and the second reducing agent injection nozzle in the chamber; and
a second steam pipe disposed between the denitrification catalyst part and the outlet.

**11.** The heat recovery steam generator of claim 9, wherein the non-ammonia-based reducing agent comprises at least one of alkyl alcohol (ROH) or ethylene glycol,

the alkyl contains 1 to 10 carbon atoms, and
the ammonia-based reducing agent comprises at least one of ammonia, ammonia solution, urea, or urea solution.

**12.** The heat recovery steam generator of claim 9, wherein the vanadium is bonded to the catalyst in the form of vanadium oxide, and the vanadium oxide is at least one of $VO_2$ or $V_2O_5$, and
the manganese is bonded to the catalyst in the form of manganese oxide, and the manganese oxide is at least one of $MnO_2$, $Mn_2O_3$, or $MnO$.

**13.** The heat recovery steam generator of claim 9, wherein the catalyst further contains oxygen species, and in the oxygen species, surface oxygen species disposed on the surface of the catalyst is 30% to 35% with respect to the total oxygen species.

**14.** A method of using the heat recovery steam generator of claim 9, wherein from a first time at which the heat recovery steam generator is turned on to a second time at which the heat recovery steam generator is operated,

the amount of the non-ammonia-based reducing agent supplied through the first reducing agent injection nozzle is decreased, and
the amount of the ammonia-based reducing agent supplied through the second reducing agent injection nozzle remains constant.

**15.** The method of claim 14, wherein the amount of the non-ammonia-based reducing agent supplied at the first time corresponds to 40% to 60% of the equivalent of nitrogen dioxide contained in the exhaust gas.

**16.** The method of claim 14, wherein the amount of the ammonia-based reducing agent supplied at the first time corresponds to 90% to 100% of the sum of the equivalents of nitrogen dioxide and nitrogen monoxide contained in the exhaust gas.

**17.** The method of claim 14, wherein the temperature of the denitrification catalyst part at the first time is 70 °C to 200 °C, and the temperature of the denitrification catalyst part at the second time is 350 °C to 400 °C.

**18.** A method of eliminating yellow plume using the heat recovery steam generator according to claim 9, the method comprising:

at the first time at which the heat recovery steam generator is turned on, supplying the non-ammonia-based reducing agent through the first reducing agent injection nozzle so that the non-ammonia-based reducing agent corresponds to 40% to 60% of the equivalent of nitrogen dioxide contained in the exhaust gas, and supplying the ammonia-based reducing agent through the second reducing agent injection nozzle so that the ammonia-based reducing agent corresponds to 90% to 100% of the sum of the equivalents of nitrogen dioxide and nitrogen monoxide contained in the exhaust gas; and
at the second time at which the heat recovery steam generator is operated normally, stopping the supply of the non-ammonia-based reducing agent but keeping the amount of the ammonia-based reducing agent supplied.

**19.** The method of eliminating yellow plume of claim 18, further comprising decreasing the amount of the non-ammonia-based reducing agent supplied from the first time to the second time.

**20.** The method of eliminating yellow plume of claim 18, wherein the temperature of the denitrification catalyst part at the first time is 70 °C to 200 °C, and
the temperature of the denitrification catalyst part at the second time is 350 °C to 400 °C.

# FIG. 1

# FIG. 2

EP 4 410 421 A1

FIG. 3A

FIG. 3B

# FIG. 4A

# FIG. 4B

# FIG. 5A

# FIG. 5B

## FIG. 6A

## FIG. 6B

FIG. 7

# FIG. 8

# FIG. 9

# FIG. 10

# FIG. 11

# FIG. 12A

# FIG. 12B

# FIG. 13A

# FIG. 13B

# FIG. 14

Europäisches
Patentamt

European
Patent Office

Office européen
des brevets

# EUROPEAN SEARCH REPORT

**Application Number**

EP 23 18 9859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 144 601 A (ANHUI HONGSHENG ENVIRONMENT ENGINEERING TECH CO LTD) 12 June 2018 (2018-06-12) | 1-5 | INV. B01J21/06 B01J23/00 |
| A | * claims; figures; examples; tables; compounds * | 6-20 | B01J23/34 B01J37/02 B01J37/03 |
| A | US 2014/335004 A1 (HA HEON-PHIL [KR] ET AL) 13 November 2014 (2014-11-13) * the whole document * | 1-20 | B01J37/08 |
| A | US 2009/142242 A1 (HONG SUNG HO [KR] ET AL) 4 June 2009 (2009-06-04) * the whole document * | 1-20 | |
| A | KR 102 378 405 B1 (UNIV KYONGGI IND & ACAD COOP FOUND [KR]) 25 March 2022 (2022-03-25) * the whole document * | 1-20 | |

TECHNICAL FIELDS
SEARCHED      (IPC)

B01J

The present search report has been drawn up for all claims

| Place of search | Date of completion of the search | Examiner |
|---|---|---|
| Munich | 11 January 2024 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 9859

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | | Publication date | Patent family member(s) | | Publication date |
|---|---|---|---|---|---|
| CN 108144601 | A | 12-06-2018 | NONE | | |
| US 2014335004 | A1 | 13-11-2014 | CN | 101242897 A | 13-08-2008 |
| | | | EP | 1904227 A1 | 02-04-2008 |
| | | | KR | 100671978 B1 | 24-01-2007 |
| | | | US | 2009143225 A1 | 04-06-2009 |
| | | | US | 2014335004 A1 | 13-11-2014 |
| | | | US | 2016256822 A1 | 08-09-2016 |
| | | | WO | 2007011101 A1 | 25-01-2007 |
| US 2009142242 | A1 | 04-06-2009 | CN | 101300068 A | 05-11-2008 |
| | | | EP | 1940546 A1 | 09-07-2008 |
| | | | KR | 100686381 B1 | 22-02-2007 |
| | | | US | 2009142242 A1 | 04-06-2009 |
| | | | US | 2013272942 A1 | 17-10-2013 |
| | | | WO | 2007037593 A1 | 05-04-2007 |
| KR 102378405 | B1 | 25-03-2022 | NONE | | |

EPO FORM P0459

For more details about this annex : see Official Journal of the European Patent Office, No. 12/82